# EUROPÄISCHE PATENTSCHRIFT

(11) **EP 3 087 877 B1**
(45) Veröffentlichungstag und Bekanntmachung des Hinweises auf die Patenterteilung: **02.06.2021**
(21) Anmeldenummer: 15165711.1
(22) Anmeldetag: 29.04.2015
(51) Int. Cl.: A47F 9/04, G07G 1/00, G07D 7/00

(54) **KASSENSYSTEMANORDNUNG MIT WARENTRENNSTABERKENNUNG**
CHECKOUT SYSTEM ASSEMBLY WITH GOODS SEPARATOR DETECTION
AGENCEMENT DE SYSTÈME DE CAISSES DOTÉ D'UNE DÉTECTION DE BARRE DE SÉPARATION POUR MARCHANDISE

(43) Veröffentlichungstag der Anmeldung: 02.11.2016
(73) Patentinhaber: Wincor Nixdorf International GmbH, 33106 Paderborn (DE)
(72) Erfinder: Baitz, Günter, 13629 Berlin (DE); Fischer, Marco, 12159 Berlin (DE); Schäfer, Oliver, 10369 Berlin (DE)

(56) Entgegenhaltungen:
- EP-A1- 2 472 432
- WO-A1-2014/014954
- WO-A1-2015/053688
- CH-A- 526 290
- DE-T2- 69 233 430
- US-A1- 2006 261 157
- US-A1- 2014 129 362

## Beschreibung

Die Erfindung betrifft eine Kassensystemanordnung nach dem Oberbegriff des Anspruchs 1 und ein Verfahren zum Betreiben einer Kassensystemanordnung nach dem Oberbegriff des Anspruchs 8.

Eine derartige Kassensystemanordnung weist eine Transportbandvorrichtung und eine Warenerfassungseinrichtung auf. Dabei umfasst die Transportbandvorrichtung mindestens einen Bandabschnitt, der zum Transport von darauf befindlichen Waren entlang eines Warenvorschubpfades in eine Vorschubbewegung versetzt werden kann, wobei die Waren entlang des Warenvorschubpfades voneinander durch mindestens einen Warentrenner separierbar sind. Die Warenerfassungseinrichtung ist ausgebildet und vorgesehen, Waren zu erfassen, die durch die Transportbandvorrichtung transportiert werden.

Eine Kassensystemanordnung der vorgenannten Art ist aus der DE 10 2008 010 642 A1 bekannt. Dabei wird ein Warentrennstab mit einem länglichen Körper und einer maschinenlesbaren Markierung zum Separieren von auf einem Warentransportband aufgelegten Waren verwendet. Eine als Warenerfassungseinrichtung dienende Abtasteinrichtung zur optischen Erkennung einer maschinenlesbaren Markierung an den Waren kann somit die Preise von zwischen einem ersten und einem zweiten Warentrennstab auf dem Warentransportband addieren. Die maschinenlesbaren Markierungen sowohl auf den Waren als auch auf den Warentrennstäben werden durch die Abtasteinrichtung erfasst. Die maschinenlesbare Markierung kann als optischer Strichcode oder als RFID-Chip ausgebildet sein.

Nachteilig ist bei der bekannten Kassensystemanordnung, dass dicht nebeneinander auf dem Transportband abgelegte Waren durch die Abtasteinrichtung gegebenenfalls nicht eindeutig erkannt werden können, beispielsweise weil ein erstes Warenstück eine optische Sichtachse zwischen der Abtasteinrichtung und einer als optischer Code ausgeführten maschinenlesbaren Markierung auf einem zweiten Warenstück verdeckt. Eine mögliche Folge ist eine unzuverlässige Warenerkennung der bekannten Kassensystemanordnung. Kunden der Kassensystemanordnung sind zudem häufig nicht gewohnt oder geübt, Waren in ausreichenden Abständen zueinander auf dem Transportband zu platzieren, sodass eine zuverlässige Erkennung aller Waren durch die Abtasteinrichtung sichergestellt wird. Um einen möglichst hohen Komfort für die Kunden zu gewährleisten, ist es daher wünschenswert, eine zuverlässige Warenerkennung sicherzustellen, auch wenn ein Kunde seine Waren in dichten Abständen zueinander auf dem Transportband ablegt.

Darüber hinaus sind auch aus den Dokumenten US 2014/129362 A1, DE 692 33 430 T2, US 2006/261157 A1 und CH 526 290 A Kassensysteme mit einer Warenerfassungseinrichtung bekannt. Des Weiteren sind aus der EP 2 472 432 A1 und der WO 2014/014954 A1 Kassensysteme mit mehreren Zuführwegen, über die Waren einer Erfassungseinrichtung zuführbar sind, bekannt.

Aufgabe der vorliegenden Erfindung ist es, die bekannte Kassensystemanordnung zu verbessern, insbesondere die Zuverlässigkeit der Warenerkennung zu verbessern.

Diese Aufgabe wird durch einen Gegenstand mit den Merkmalen des Anspruchs 1 gelöst.

Danach sind mindestens eine Sensoreinrichtung sowie eine Steuerungseinrichtung vorgesehen, wobei die mindestens eine Sensoreinrichtung entlang des Warenvorschubpfades von der Warenerfassungseinrichtung beabstandet angeordnet ist und einen Sensor und einen Erfassungsbereich umfasst. Die Sensoreinrichtung ist ausgebildet und vorgesehen, zu erfassen, ob sich ein Warentrenner im Erfassungsbereich befindet oder nicht. Die Steuerungseinrichtung ist ausgebildet und vorgesehen, die Vorschubbewegung des Bandabschnitts der Transportbandvorrichtung in Abhängigkeit von der Erfassung des Warentrenners im Erfassungsbereich der Sensoreinrichtung zu steuern.

Durch die beabstandete Anordnung der Sensoreinrichtung (insbesondere des Erfassungsbereichs) von der Warenerfassungseinrichtung ist es möglich, durch Erfassung des Warentrenners den Warenvorschub an einer von der Warenerfassungseinrichtung (entlang des Warenvorschubpfades) beabstandeten Stelle zu überwachen. Die Information, ob sich der Warentrenner im Erfassungsbereich der Sensoreinrichtung befindet oder nicht, kann verwendet werden, um die Effizienz und/oder die Zuverlässigkeit der Warenerkennung der Kassensystemanordnung zu verbessern.

Die Kassensystemanordnung kann allgemein als Checkout-Platz im Groß- oder Einzelhandel eingesetzt werden, beispielsweise in Warenhandelsmärkten wie Baumärkten, Supermärkten, usw.

Insbesondere kann die Warenerfassungseinrichtung der Kassensystemanordnung als Portalscanner ausgebildet sein, z.B. als 360°-Portalscanner mit optischer Erfassung der Art und Anzahl der Waren. Ein Portalscanner stellt ein Portal bereit, durch das Waren transportierbar sind. Während des Transports durch das Portal werden Art und Anzahl der Waren automatisch erkannt. So ist ein besonders effizienter Kassiervorgang möglich. Alternativ kann die Kassensystemanordnung aber auch mit einer durch Personal (manuell) bedienten Erfassungseinrichtung verwendet werden.

Die Sensoreinrichtung ist der Warenerfassungseinrichtung (entlang des Warenvorschubpfades) vorgelagert angeordnet. Bestimmungsgemäß wird der Warentrenner von einem Kunden derart auf der Transportbandvorrichtung abgelegt, dass er sich entlang des Warenvorschubpfades zwischen den Waren des Kunden und den Waren eines vorangehenden oder nachkommenden anderen Kunden befindet. Damit kann der Warentrenner zugleich das Ende der Waren des einen Kunden und den Anfang der Waren des nächsten Kunden anzeigen. Wenn die Sensoreinrichtung der Warenerfassungseinrichtung (in einem bekannten Abstand) vorgelagert angeordnet ist, kann die Steuerungseinrichtung ermitteln, wie lange der mindestens eine Bandabschnitt der Transportbandvorrichtung mit einer bestimmten Geschwindigkeit eine Vorschubbewegung ausführen muss, damit alle Waren des einen Kunden die Entfernung zwischen dem Erfassungsbereich der Sensoreinrichtung und der Warenerfassungseinrichtung zurückgelegt hat.

Zusätzlich kann die Sensoreinrichtung der Warenerfassungseinrichtung aber auch (entlang des Warenvorschubpfades) nachgelagert angeordnet sein. So könnte z.B. ermittelt werden, ob der Warentrenner wie erwartet mittels der Transportbandvorrichtung transportiert wird oder ob z.B. ein Warenrückstau vorliegt.

Die Sensoreinrichtung kann ausgebildet sein, durch Auslesen eines am Warentrenner vorgesehenen maschinenlesbaren Codes mittels des Sensors zu erfassen, ob sich der Warentrenner im Erfassungsbereich befindet. Hierdurch ist es möglich, einen Warentrenner besonders eindeutig zu erfassen.

Der maschinenlesbare Code kann insbesondere mit Hilfe von elektromagnetischen Feldern ausgelesen werden. Ein elektromagnetisches Feld kann dabei von dem Sensor der Sensoreinrichtung erzeugt werden.

Der am Warentrenner vorgesehene maschinenlesbare Code kann auf verschiedene Weise bereitgestellt werden. Vorzugsweise wird der maschinenlesbare Code durch einen RFID-Tag bereitgestellt. Der Sensor der Sensoreinrichtung ist bevorzugt als RFID-Antenne zum Auslesen des RFID-Tags des Warentrenners ausgebildet. So kann die Sensoreinrichtung einen Warentrenner erkennen, ohne dass eine optische Sichtverbindung zwischen dem Sensor und dem Warentrenner vorliegen muss. Die RFID-Antenne und der RFID-Tag können insbesondere zur RFID-Kommunikation in einem Frequenzband mit 13,56 MHz ausgebildet sein. Um eine möglichst gute Erfassung des RFID-Tags zu gewährleisten, sollte der Warentrenner aus einem nicht-metallischen Material hergestellt sein, um Dämpfungen oder Abschattungen des Antennenfeldes zu vermeiden. In diesem Falle kann sich das RFID-Tag im Inneren des Trennstabs befinden (idealerweise mittig im inneren Kern), um zu gewährleisten, so dass das Tag in jeder Lage und Drehung des Stabes gleichermaßen detektiert werden kann. Alternativ können aber auch RFID-Tags, ausgestattet mit einer Kunststoffisolation (bspw. in Form einer dünnen Kunststofffolie), auf eine etwaige metallische Oberfläche des Trennstabs (von außen) aufgebracht werden. Der Warentrenner kann länglich ausgebildet sein. Der RFID-Tag kann entlang der Längserstreckung des Warentrenners mittig angeordnet sein. Alternativ kann sich der RFID-Tag z.B. im Wesentlichen über die gesamte Längserstreckung des Warentrenners erstrecken. Beispielsweise kann ein unter der Bezeichnung TW-R16-B128 erhältlicher RFID-Tag eingesetzt werden. Für eine optimierte Erfassung kann ferner ein gewölbter RFID-Tag vorgesehen sein.

Alternativ oder zusätzlich kann der maschinenlesbare Code aber beispielsweise auch als Strichcode oder als sogenannter QR-Code ausgebildet sein. Die Sensoreinrichtung umfasst dann bevorzugt einen oder mehrere als optische Erfassungsmittel ausgebildete Sensoren zum Auslesen des Strich- oder QR-Codes, wobei in diesem Fall unter einem Auslesen das Lesen eines Strich- oder QR-Codes gemeint ist.

Die Kassensystemanordnung kann eine Mehrzahl, insbesondere eine Vielzahl von Warentrennern umfassen, an denen jeweils ein maschinenlesbarer Code vorgesehen ist. Bevorzugt unterscheiden sich mehrere - insbesondere alle - maschinenlesbaren Codes voneinander. So können die mehreren Warentrenner durch die Sensoreinrichtung voneinander unterschieden und eindeutig identifiziert werden. Die Sensoreinrichtung kann ausgebildet sein, mehrere sich gleichzeitig im Erfassungsbereich befindliche Warentrenner zu erfassen (und ggf. auch eindeutig zu identifizieren). Die maschinenlesbaren Codes können beispielsweise eine UID (unique identifier) umfassen. Durch Auslesen der UID kann die Steuerungseinrichtung Warentrenner von Warenstücken unterscheiden, die ebenfalls RFID-Tags umfassen können. Hierzu kann die Steuerungseinrichtung eine (ggf. nachträglich erweiterbare) Liste von UIDs in geeigneter Weise speichern oder mit einer externen Speichereinrichtung verbunden sein. Durch Vergleich der Ausgelesenen UID mit den gespeicherten UIDs kann die Steuerungseinrichtung feststellen, ob die UID einem (oder einem bestimmten) Warentrenner zugeordnet ist. In Abhängigkeit davon kann sie die Vorschubbewegung des Bandabschnitts der Transportbandvorrichtung steuern.

Die Warenerfassungseinrichtung kann einen Sensor und einen dem Sensor zugeordneten Erfassungsbereich umfassen. Der Sensor der Warenerfassungseinrichtung ist ausgebildet, den am Warentrenner vorgesehenen maschinenlesbaren Code zu erfassen, wenn sich der Warentrenner im Erfassungsbereich der Warenerfassungseinrichtung befindet. Der Erfassungsbereich der Warenerfassungseinrichtung ist an der Warenerfassungseinrichtung oder benachbart dazu ausgebildet. Insbesondere ist der Erfassungsbereich der Warenerfassungseinrichtung beabstandet vom Erfassungsbereich der Sensoreinrichtung angeordnet. Die Warenerfassungseinrichtung (oder die ggf. damit verbundene Steuerungseinrichtung) kann erkennen, ob sich ein (oder ein bestimmter) Warentrenner im Erfassungsbereich der Warenerfassungseinrichtung befindet oder nicht.

Die Steuerungseinrichtung kann dazu ausgebildet sein, zumindest einen Bandabschnitt der Transportbandvorrichtung aus einem Stillstand heraus in eine Vorschubbewegung zu versetzen (oder alternativ die Geschwindigkeit der Vorschubbewegung von einer ersten Geschwindigkeit in eine davon verschiedene zweite Geschwindigkeit zu ändern), wenn sie ein Steuersignal empfängt, wenn sie erkennt, dass eine vorbestimmte oder vorbestimmbare Standzeit abgelaufen ist und/oder wenn ein Benutzer einen entsprechenden Befehl an die Steuerungseinrichtung eingibt. Beispielsweise kann ein Betätigungsmittel wie eine Taste vorgesehen sein, welche ein Benutzer (z.B. ein Kunde) betätigen kann, wobei die Steuerungseinrichtung bei Betätigung des Betätigungsmittels den Bandabschnitt der Transportbandvorrichtung in eine Vorschubbewegung versetzt. Ein Steuersignal kann z.B. von einem Packmuldensensor der Kassensystemanordnung bereitgestellt werden, der erkennt, ob eine Packmulde (eines Warenentnahmebereichs der Kassensystemanordnung) mit Waren belegt oder frei ist. Beispielsweise stellt der Packmuldensensor ein Steuersignal bereit, wenn die Packmulde (oder falls mehrere Packmulden vorgesehen sind, eine oder eine bestimmte Packmulde) frei ist.

Alternativ oder zusätzlich ist die Steuerungseinrichtung ausgebildet, zumindest einen Bandabschnitt der Transportbandvorrichtung aus einem Stillstand heraus in eine Vorschubbewegung zu versetzen, wenn der Sensor der Warenerfassungseinrichtung einen Warentrenner im Erfassungsbereich der Warenerfassungseinrichtung erfasst.

Die Steuerungseinrichtung ist ausgebildet, in Abhängigkeit von der Erfassung des Warentrenners im Erfassungsbereich der Sensoreinrichtung (oder alternativ oder zusätzlich im Erfassungsbereich der Warenerfassungseinrichtung) die Vorschubbewegung zumindest eines solchen Bandabschnitts der Transportbandvorrichtung zu steuern, welcher der Warenerfassungseinrichtung entlang des Warenvorschubpfades vorgelagert angeordnet ist. Auf diese Weise kann die Steuerungseinrichtung die Transportbandvorrichtung so steuern, dass die Geschwindigkeit der Warenzufuhr an die Warenerfassungseinrichtung erhöht oder verringert wird, oder dass die Warenzufuhr an die Warenerfassungseinrichtung gestartet oder gestoppt wird, je nachdem ob ein Warentrenner (oder ein bestimmter Warentrenner) an der vorgelagerten Sensoreinrichtung erfasst wird oder nicht.

Die Transportbandvorrichtung umfasst mindestens einen ersten Bandabschnitt und einen zweiten Bandabschnitt. Der erste Bandabschnitt ist zum Ablegen von Waren ausgebildet und stellt einen Warenablagebereich bereit. Der zweite Bandabschnitt ist zum Zuführen der auf dem ersten Bandabschnitt abgelegten Waren in den Erfassungsbereich der Warenerfassungseinrichtung ausgebildet. Selbstverständlich können auch noch weitere Bandabschnitte vorgesehen sein. Insbesondere kann der erste Bandabschnitt entlang des Warenvorschubpfades dem zweiten Bandabschnitt vorgelagert sein. Wird der so angeordnete erste Bandabschnitt in eine Vorschubbewegung versetzt, führt er darauf abgelegte Waren an den zweiten Bandabschnitt zu.

Der erste und der zweite Bandabschnitt können mit unterschiedlichen Vorschubgeschwindigkeiten betrieben werden. Die Steuerungseinrichtung ist ausgebildet, den ersten Bandabschnitt in eine Vorschubbewegung mit einer ersten Geschwindigkeit und den zweiten Bandabschnitt in eine Vorschubbewegung mit einer zweiten Geschwindigkeit zu versetzen. Dabei kann insbesondere vorgesehen sein, dass die zweite Geschwindigkeit größer ist als die erste Geschwindigkeit. Durch die höhere Geschwindigkeit des zweiten Bandabschnitts können die Abstände mehrerer Waren zueinander entlang des Warenvorschubpfades vergrößert werden (es kann eine Warenvereinzelung erreicht werden). Durch größere Abstände zwischen einzelnen Waren ist eine höhere Präzision und Zuverlässigkeit bei der Erfassung der Waren an der Warenerfassungseinrichtung möglich. Die Steuerung der Geschwindigkeiten erfolgt in Abhängigkeit von der Erfassung des Warentrenners im Erfassungsbereich der Sensoreinrichtung.

Die Steuerungseinrichtung ist dazu ausgebildet, eine Geschwindigkeit der Vorschubbewegung des ersten Bandabschnitts zu reduzieren, während sich der Warentrenner im Erfassungsbereich der Sensoreinrichtung befindet und vom Sensor der Sensoreinrichtung erfasst wird. Durch die reduzierte Geschwindigkeit kann eine zuverlässige Zuordnung von Waren beidseits des Warentrenners zu den jeweiligen Kunden erreicht werden. Sowohl der erste als auch der zweite Bandabschnitt können jeweils in mehrere Teilabschnitte unterteilt sein, die unabhängig voneinander in eine Vorschubbewegung versetzbar sind.

Ferner ist die Steuerungseinrichtung ausgebildet, den ersten Bandabschnitt zu stoppen, sobald der Warentrenner den Erfassungsbereich der Sensoreinrichtung verlassen hat. Auf diese Weise kann sichergestellt werden, dass Waren, die ggf. dem Warentrenner folgen, nicht weiter transportiert werden. Dabei handelt es sich beispielsweise um Waren des nächsten Kunden.

Der erste Bandabschnitt grenzt an einem Übergang an den zweiten Bandabschnitt an. Der Erfassungsbereich der Sensoreinrichtung ist an dem Übergang zwischen dem ersten und dem zweiten Bandabschnitt angeordnet. So wird durch entsprechende Steuerung der Bandabschnitte ermöglicht, Waren beidseits (entlang des Warenvorschubpfades) des Warentrenners zu separieren, wenn ein Warentrenner am Erfassungsbereich der Sensoreinrichtung erfasst wird.

Der Erfassungsbereich der Sensoreinrichtung kann sich im Wesentlichen über die gesamte Breite (quer zum Warenvorschubpfad an dieser Stelle der Transportbandvorrichtung) des ersten Bandabschnitts erstrecken (z.B. etwa 45 cm). So kann eine hohe Zuverlässigkeit und Präzision bei der Erfassung des Warentrenners erreicht werden.

Der Warenvorschubpfad ist in einer beispielhaften Ausführungsform verzweigt ausgebildet. So umfasst der erste Bandabschnitt mehrere Zufuhrbänder, die mit (demselben) zweiten Bandabschnitt derart verbunden sind, dass Waren von den Zufuhrbändern an den zweiten Bandabschnitt und von diesem weitertransportiert werden können. So können mehrere Kunden gleichzeitig Waren auf der Kassensystemanordnung ablegen und die Waren können von derselben Warenerfassungseinrichtung erfasst werden. Häufig erfolgt die Erfassung von Waren mit einer höheren Geschwindigkeit als das Auflegen von Waren durch Kunden, sodass durch den Einsatz mehrerer erster Bandabschnitte die Auslastung der Warenerfassungseinrichtung erhöht werden kann.

Es sei angemerkt, dass die Kassensystemanordnung auch mehrere Sensoreinrichtungen umfassen kann. Diese können insbesondere entlang des Warenvorschubpfades voneinander beabstandet angeordnet sein.

Die Aufgabe wird auch durch ein Verfahren zum Betreiben einer Kassensystemanordnung gemäß Anspruch 8 gelöst, die eine Transportbandvorrichtung und eine Warenerfassungseinrichtung aufweist. Die Transportbandvorrichtung umfasst mindestens einen Bandabschnitt, der zum Transport von darauf befindlichen Waren entlang eines Warenvorschubpfades in eine Vorschubbewegung versetzt werden kann, wobei die Waren entlang des Warenvorschubpfades voneinander durch mindestens einen Warentrenner separierbar sind. Die Warenerfassungseinrichtung kann mittels der Transportbandvorrichtung transportierte Waren erfassen. Dabei ist vorgesehen, dass die Kassensystemanordnung ferner mindestens eine entlang des Warenvorschubpfades von der Warenerfassungseinrichtung beabstandet angeordnete Sensoreinrichtung und eine Steuerungseinrichtung umfasst, wobei die Sensoreinrichtung einen Sensor und einen Erfassungsbereich aufweist und mittels des Sensors erfasst, ob sich der Warentrenner im Erfassungsbereich befindet oder nicht, und wobei die Steuerungseinrichtung in Abhängigkeit von der Erfassung des Warentrenners im Erfassungsbereich der Sensoreinrichtung die Vorschubbewegung des Bandabschnitts der Transportbandvorrichtung steuert.

Die vorangehend für die Kassensystemanordnung beschriebenen Vorteile und vorteilhaften Ausgestaltungen finden analog auch auf das Verfahren Anwendung, so dass auf das oben Ausgeführte verwiesen werden soll.

Die Erfindung wird nachfolgend unter Bezugnahme auf die Figuren anhand mehrerer Ausführungsbeispiele näher erläutert. Es zeigen:
- Fig. 1A-1F: eine schematische Darstellung einer Kassensystemanordnung in mehreren Stadien eines Transports von Waren mehrerer Kunden;
- Fig. 2: ein Blockschaltbild mit Komponenten der Kassensystemanordnung der Fig. 1A-1F;
- Fig. 3A-3I: eine schematische Darstellung einer Kassensystemanordnung gemäß einem weiteren Ausführungsbeispiel in mehreren Stadien eines Transports von Waren mehrerer Kunden;
- Fig. 4: eine schematische Darstellung einer Kassensystemanordnung gemäß einem weiteren Ausführungsbeispiel;
- Fig. 5: eine seitliche Ansicht auf einen Bandabschnitt einer Kassensystemanordnung und die Anordnung einer Sensoranordnung; und
- Fig. 6: ein Ablaufdiagramm einer Steuerung einer Kassensystemanordnung.

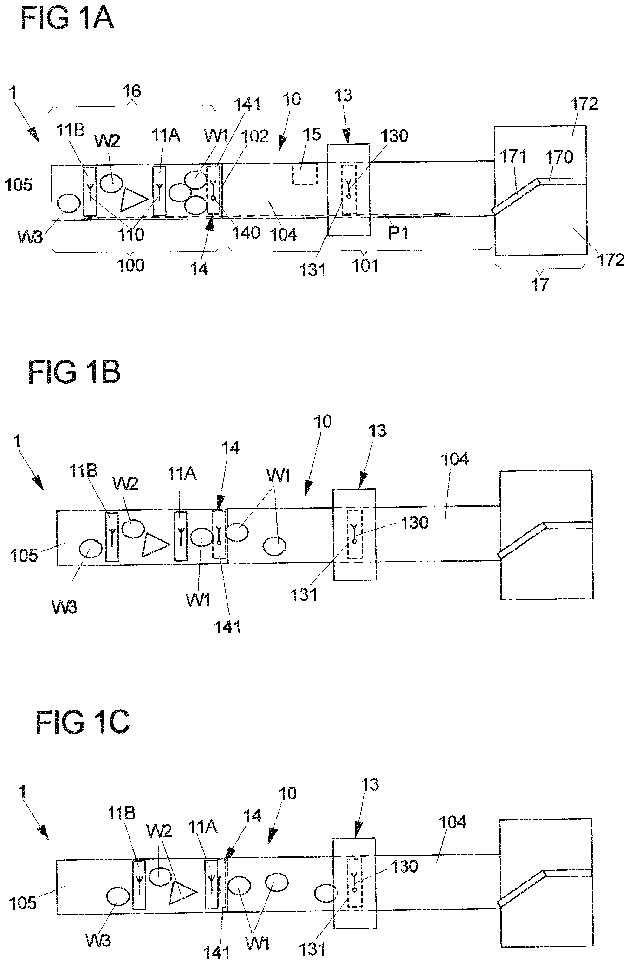

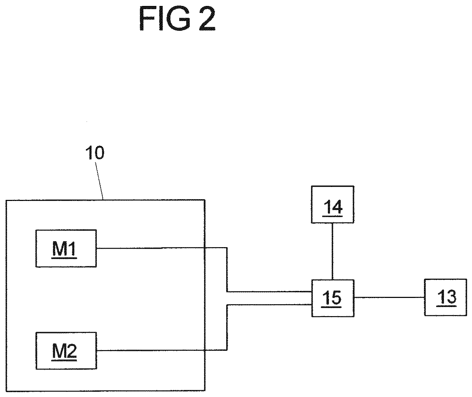

Fig. 1A bis 1F zeigen ein Beispiel einer Kassensystemanordnung 1. Fig. 2 zeigt die Verbindung einiger Komponenten der Kassensystemanordnung untereinander. Die Kassensystemanordnung 1 umfasst einen Warenablagebereich 16, einen Warenentnahmebereich 17 und eine Transportbandvorrichtung 10. Mittels der Transportbandvorrichtung 10 sind Waren W1-W3, die im Warenablagebereich 16 abgelegt wurden, entlang eines Warenvorschubpfades P1 in den Warenentnahmebereich 17 transportierbar. Der Warenentnahmebereich 17 umfasst vorliegend zwei Packmulden 172, aus denen darin befindliche Waren W1-W3 entnommen werden können und die durch eine Packmuldentrennung voneinander getrennt sind. Die Packmuldentrennung umfasst ein unbewegliches Barriereelement 170 und einem daran befestigtes bewegliches Barriereelement 171. Das Barriereelement kann schwenkbar angelenkt an dem Barriereelement befestigt sein. Die Packmuldentrennung kann auch nur durch ein bewegliches Barriereelement realisiert sein.

Die Transportbandvorrichtung 10 umfasst einen ersten Bandabschnitt 100 und einen zweiten Bandabschnitt 101. Der zweite Bandabschnitt 101 grenzt an den ersten Bandabschnitt 100 an. Beide Bandabschnitte 100, 101 sind in eine Vorschubbewegung versetzbar und können somit Waren W1-W3 von dem Warenablagebereich 16 in den Warenentnahmebereich 17 transportieren. Die Bandabschnitte 100, 101 bilden zwischen sich einen Übergang 102. Wenn Waren W1-W3 von dem ersten Bandabschnitt 100 zum zweiten Bandabschnitt 101 transportiert werden, überqueren sie den Übergang 102 zwischen den Bandabschnitten.

Vorliegend wird der Warenablagebereich 16 durch den ersten Bandabschnitt 100 bereitgestellt. Der erste Bandabschnitt 100 wird durch ein geschlossenes, umlaufendes Zufuhrband 105 ausgebildet. Dieses Zufuhrband 105 wird über einen Motor M1 angetrieben (vgl. Fig. 2). Der Warenentnahmebereich 17 grenzt an den zweiten Bandabschnitt 101 an. Der zweite Bandabschnitt 101 ist zwischen dem ersten Bandabschnitt 100 und dem Warenentnahmebereich 17 angeordnet.

Die Kassensystemanordnung 1 umfasst ferner eine Warenerfassungseinrichtung in Form eines Portalscanners 13. Der Portalscanner 13 ist am zweiten Bandabschnitt 101 der Transportbandvorrichtung 10 angeordnet. Der Portalscanner 13 ist in etwa mittig am zweiten Bandabschnitt 101 (oder auf halbem Weg zwischen dem ersten Bandabschnitt 100 der Transportbandvorrichtung 10 und dem Warenentnahmebereich 17) angeordnet. Der zweite Bandabschnitt 101 wird durch ein geschlossenes, umlaufendes Abtransportband 104 ausgebildet, mittels welchem Waren W1-W3 vom Übergang 102 abtransportierbar und an den Portalscanner 13 zuführbar sind. Das Abtransportband 104 wird durch einen Motor M2 angetrieben.

Ferner ist der Portalscanner 13 beabstandet zum Übergang 102 zwischen den beiden Bandabschnitten 100, 101 angeordnet.

Der Portalscanner 13 umfasst ein oder mehrere Mittel zur Erfassung von Waren, die durch den Portalscanner 13 transportiert werden. Z.B. kann der Portalscanner 13 mehre re optische Abtastmittel umfassen, um Barcodes oder ähnliche Markierungen an den Waren W1-W3 zu erkennen und so die Art und Anzahl der Waren W1-W3 zu bestimmen. Anhand der Art und Anzahl der Waren W1-W3 eines Kunden können die einzelnen Preise der Waren W1-W3 und eine von dem Kunden zu bezahlende Summe bestimmt werden.

Zur Steuerung der Transportbandvorrichtung 10, des Portalscanners 13 und einer noch näher zu erläuternden Sensoreinrichtung 14 umfasst die Kassensystemanordnung 1 eine Steuerungseinrichtung 15. Diese ist, wie in Fig. 2 gezeigt, mit den Motoren M1, M2 der Transportbandvorrichtung 10, mit dem Portalscanner 13 und mit der Sensoreinrichtung 14 verbunden. Die Verbindung erfolgt z.B. über Steuerleitungen.

Alternativ zur dargestellten Verbindung der Motoren M1, M2 der Transportbandvorrichtung 10 mit der Steuerungseinrichtung 15 könnten die Motoren auch von einer in den Figuren nicht dargestellten Steuereinheit (z.B. eine speicherprogrammierbare Steuerung, die ggf. auch weitere, nicht gezeigte Funktionen der Kassensystemanordnung steuert) gesteuert werden, die wiederum mit der Steuerungseinrichtung 15 verbunden ist und von dieser Signale empfängt.

Alternativ kann der Bandabschnitt 100 oder Bandabschnitt 101 durch ein anderes Mittel als ein geschlossenes, umlaufendes Abtransportband realisiert sein, wie durch eine Rollenbahn oder einen Rollenförderer oder Rollenteppich.

Die Steuerungseinrichtung 15 ist lediglich in Fig. 1A schematisch dargestellt und mit der Transportbandvorrichtung 10, dem Portalscanner 13 und der Sensoreinrichtung 14 in geeigneter Weise verbunden, z.B. durch elektrische Steuerkabel, über eine RS-232-Schnittstelle, eine RS-485-Schnittstelle und/oder einen CAN-Bus. Alternativ kann die Steuerungseinrichtung 15 aber auch z.B. in den Portalscanner 13 oder in die Sensoreinrichtung 14 integriert werden, welche(r) dann auch als Steuerungseinrichtung dient. In noch einer weiteren Alternative ist die Steuerungseinrichtung 15 von der übrigen Kassensystemanordnung 1 beabstandet angeordnet. Auch in diesem Fall ist die Steuerungseinrichtung 15 mit der Kassensystemanordnung 1 (oder deren einzelnen, von der Steuerungseinrichtung 15 gesteuerten Komponenten) über geeignete Mittel verbunden, z.B. über elektrische Steuerkabel, über eine RS-232-Schnittstelle, eine RS-485-Schnittstelle und/oder einen CAN-Bus.

Mehrere Kunden können ihre Waren W1-W3 im Warenablagebereich 16 hintereinander (entlang des Warenvorschubpfades P1 gesehen) ablegen. Dabei werden die Waren W1-W3 der verschiedenen Kunden mittels Warentrennern 11A, 11B voneinander separiert. Durch die Warentrenner 11A, 11B wird eine Zuordnung bestimmter Waren zu den verschiedenen Kunden ermöglicht. Vorliegend sind Waren W1 eines ersten Kunden, Waren W2 eines zweiten Kunden und Waren W3 eines dritten Kunden schematisch dargestellt. Die Waren W1-W3 sind durch zwei Warentrenner 11A,11B voneinander separiert.

Die Warentrenner 11A, 11B sind im Wesentlichen länglich, insbesondere stabförmig. Die Warentrenner 11A, 11B sind in etwa so lang, dass sie einen Großteil der Breite des ersten bzw. zweiten Bandabschnitts 100, 101 quer zum Warenvorschubpfand P1 überspannen, wenn sie im Wesentlichen quer zum Warenvorschubpfad P1 angeordnet sind. Im Querschnitt sind die Warentrenner 11A, 11B z.B. im Wesentlichen quadratisch, rechteckig oder dreieckig ausgebildet.

Die Warentrenner 11A, 11B umfassen jeweils einen maschinenlesbaren Code. Der maschinenlesbare Code kann jeweils mittels eines elektromagnetischen Feldes ausgelesen werden, welches z.B. durch einen Sensor bereitgestellt wird. Im vorliegenden Ausführungsbeispiel werden die maschinenlesbaren Codes durch jeweils einen RFID-Tag 110 bereitgestellt. Der RFID-Tag kann durch einen an sich bekannten 13,56 MHz-Transponder gebildet sein.

Am Ende des ersten Bandabschnitts 100 der Transportbandvorrichtung 10 ist die schon erwähnte Sensoreinrichtung 14 angeordnet. Vorliegend ist die Sensoreinrichtung 14 am ersten Bandabschnitt 100 angrenzend an den Übergang 102 zwischen dem ersten und dem zweiten Bandabschnitt 100, 101 der Transportbandvorrichtung 10 vorgesehen. Die Sensoreinrichtung 14 umfasst einen Erfassungsbereich 141 (in den Fig. 1A bis 1F gestrichelt dargestellt). Weiter umfasst die Sensoreinrichtung 14 einen Sensor in Form einer RFID-Antenne 140. Die RFID-Antenne 140 ist dazu ausgebildet, RFID-Tags 110 eines Warentrenners 11A, 11B (oder mehrerer Warentrenner 11A, 11B) zu erkennen und dessen maschinenlesbaren Code auszulesen, wenn sich der Warentrenner 11A, 11B im Erfassungsbereich 141 der Sensoreinrichtung 14 befindet. Die RFID-Antenne 140 der Sensoreinrichtung 14 ist vorliegend unter dem Transportband des ersten Bandabschnitts 100 angeordnet, d.h. das Transportband des ersten Bandabschnitts 100 befindet sich zwischen den darauf abgelegten Waren W1-W3 und der darunter angeordneten RFID-Antenne 140 der Sensoreinrichtung 14.

Der maschinenlesbare Code der RFID-Tags 110 umfasst eine UID, mittels derer jeder Warentrenner 11A, 11B eindeutig identifizierbar ist. Gegebenenfalls können auch einzelne Warenstücke einen RFID-Tag umfassen. Die Steuerungseinrichtung 15 umfasst eine Liste von UIDs der Warentrenner 11A, 11B und kann so Warentrenner 11A, 11B von Warenstücken mit RFID-Tags unterscheiden.

Im Beispiel gemäß den Fig. 1A-1F umfasst auch der Portalscanner 13 einen Sensor in Form einer RFID-Antenne 130 sowie einen zugeordneten Erfassungsbereich 131. Die Ausbildung und Funktion der RFID-Antenne 130 entsprechen der Ausbildung und Funktion der RFID-Antenne 140 der Sensoreinrichtung 14, sodass auf die entsprechende Beschreibung verwiesen wird. Im Unterschied zur RFID-Antenne 140 der Sensoreinrichtung 14 ist die RFID-Antenne 130 des Portalscanners 13 aber im Bereich des Portalscanners 13 am zweiten Bandabschnitt 101 der Transportbandvorrichtung 10 angeordnet.

Der Ablauf mehrerer nachfolgender Kassiervorgänge soll nun anhand der einzelnen Fig. 1A-1F näher erläutert werden, die alle dieselbe Kassensystemanordnung 1 in verschiedenen Stadien des Transports von Waren W1-W3 mehrerer Kunden zeigen.

Gemäß Fig. 1A haben drei Kunden ihre Waren W1-W3 im Warenablagebereich 16 hintereinander auf den ersten Bandabschnitt 100 der Transportbandvorrichtung 10 abgelegt. Zwischen den Waren W1, W2 des ersten und des zweiten Kunden wurde von einem der Kunden einen Warentrenner 11A abgelegt. Der Warentrenner 11A ist im Wesentlichen senkrecht zum Warenvorschubpfad P1 ausgerichtet. In ähnlicher Weise ist zwischen den Waren W2, W3 des zweiten und des dritten Kunden ein weiterer Warentrenner 11B abgelegt worden. Die Waren W1-W3 der einzelnen Kunden sind somit jeweils durch die Warentrenner 11A, 11B voneinander separiert.

Die Steuerungseinrichtung 15 steuert den ersten Bandabschnitt 100 der Transportbandvorrichtung 10 derart an, dass dieser eine Vorschubbewegung mit einer ersten Geschwindigkeit V1 ausführt. Ferner steuert die Steuerungseinrichtung 15 den zweiten Bandabschnitt 101 der Transportbandvorrichtung 10 derart an, dass dieser eine Vorschubbewegung mit einer zweiten Geschwindigkeit V2 ausführt. Die Vorschubbewegungen erfolgen entlang des Warenvorschubpfades P1 in Richtung vom Warenablagebereich 16 hin zum Warenentnahmebereich 17. Die erste Geschwindigkeit V1 ist niedriger als die zweite Geschwindigkeit V2. Die erste Geschwindigkeit V1 kann z.B. in etwa zwei Drittel, die Hälfte oder ein Drittel der zweiten Geschwindigkeit V2 betragen. Zum Beispiel liegt die erste Geschwindigkeit V1 im Bereich von 10 cm/s bis 20 cm/s. Die zweite Geschwindigkeit V2 kann beispielsweise 32 cm/s betragen.

Zur Steuerung des Motors des Zuführbandes 105 und gegebenenfalls auch des Motors des Abtransportbandes 104 kann die Kassensystemanordnung 1 einen Frequenzumrichter umfassen. Dabei kann vorgesehen sein, dass die Steuerungseinheit 15 ausgebildet ist, den Frequenzumrichter mit analogen Signalen zu beaufschlagen. Konkret kann die Steuerungseinheit 15 mit folgenden elektrischen Leitungen mit dem Frequenzumrichter verbunden sein: mit einer ersten Steuerleitung, einer zweiten Steuerleitung und einer Masseleitung. An der ersten Steuerleitung kann die Steuerungseinheit 15 eine elektrische Spannung von 0 V oder von 24 V bereitstellen, um einen Motor aus- oder einzuschalten. An der zweiten Steuerleitung kann die Steuereinheit 15 verschiedene Spannungen bereitstellen, um eine Drehgeschwindigkeit des Motors einzustellen. Insbesondere kann eine Spannung von 5 V für eine niedrige Drehgeschwindigkeit bereitgestellt werden, wenn ein Warentrenner 11A, 11B von der Sensoreinrichtung 14 erfasst wird. Entsprechend kann eine Spannung von 10 V für eine höhere Drehgeschwindigkeit bereitgestellt werden. Die Geschwindigkeit einer Vorschubbewegung eines Transportbandes resultiert aus der Drehgeschwindigkeit des Motors.

Alternativ kann z.B. vorgesehen sein, dass die Steuerungseinrichtung 15 Signale an eine speicherprogrammierbare Steuerung bereitstellt, die in Abhängigkeit dieser Signale den Frequenzumrichter ansteuert.

Durch die höhere Geschwindigkeit der Vorschubbewegung des zweiten Bandabschnitts 101 gegenüber dem ersten Bandabschnitt 100 folgt, dass die Waren W1-W3 auf dem zweiten Bandabschnitt 101 einen größeren Abstand zueinander aufweisen als auf dem ersten Bandabschnitt 100.

In Fig. 1B wurden die Waren W1-W3 gegenüber Fig. 1A bereits eine gewisse Strecke entlang des Warenvorschubpfades P1 in Richtung des Warenentnahmebereichs 17 transportiert. Ein Teil der Waren W1 des ersten Kunden haben bereits den Übergang 102 zwischen dem ersten und dem zweiten Bandabschnitt 100, 101 überquert und werden durch den zweiten Bandabschnitt 101 befördert. Beide Warentrenner 11A, 11B befinden sich noch außerhalb des Erfassungsbereichs 141 der Sensoreinrichtung 14. In Fig. 1C wurden die Waren W1-W3 gegenüber Fig. 1B eine gewisse weitere Strecke transportiert. Sämtliche Waren W1 des ersten Kunden haben den Übergang 102 zwischen dem ersten und dem zweiten Bandabschnitt 100,101 überquert und werden durch den zweiten Bandabschnitt 101 befördert. Der zwischen den Waren W1, W2 des ersten und des zweiten Kunden angeordnete Warentrenner 11A wurde bereits teilweise in den Erfassungsbereich 141 der Sensoreinrichtung 14 transportiert und wird nun durch die RFID-Antenne 140 der Sensoreinrichtung 14 erfasst. Die von der RFID-Antenne 140 erfassten Informationen werden an die Steuerungseinrichtung 15 bereitgestellt. Erkennt die Steuerungseinrichtung 15 die UID eines Warentrenners 11A, 11B, verringert sie die Geschwindigkeit der Vorschubbewegung des ersten Bandabschnitts 100 auf einen gegenüber der Geschwindigkeit V1 niedrigere Geschwindigkeit V3. In einer Ausführungsform könnte dies z.B. von 20 cm/s auf einen Wert für V3 zwischen 10 cm/s und 12 cm/s, insbesondere 10 cm/s reduziert werden. Zusätzlich kann ggf. vorgesehen sein, dass die Steuerungsvorrichtung 15 die Geschwindigkeit der Vorschubbewegung des ersten Bandabschnitts 100 auch dann reduziert, wenn viele Warentrenner 11 in kurzen Abständen erfasst werden. Die Auswertung aller Tags könnte sonst zu einer zu großen Verzögerung führen.

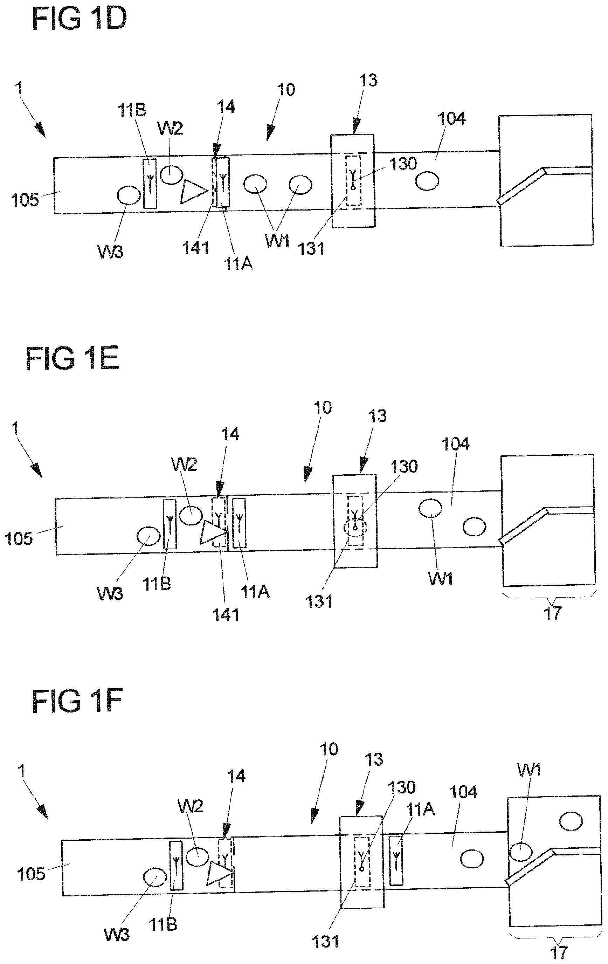

In Fig. 1D wurden die Waren W1-W3 gegenüber Fig. 1C über eine gewisse Strecke weiter transportiert. Dabei befindet sich der Warentrenner 11A zwischen den Waren W1, W2 des ersten und des zweiten Kunden noch immer teilweise im Erfassungsbereich 141 der Sensoreinrichtung 14. Die Steuerungseinrichtung 15 hält die Geschwindigkeit der Vorschubbewegung des ersten Bandabschnitts 100 daher weiter auf der gegenüber der Geschwindigkeit V1 niedrigeren Geschwindigkeit V3. Die Geschwindigkeit der Vorschubbewegung des zweiten Bandabschnitts 101 liegt weiterhin bei V2. Ein Teil der Waren W1 des ersten Kunden hat in Fig. 1D bereits den Portalscanner 13 durchquert. Art und Anzahl dieser Waren wurden beim Durchqueren des Portalscanners 13 von diesem erfasst.

Durch einen weiteren Vorschub des ersten und des zweiten Bandabschnitts 100, 101 verlässt der Warentrenner 11A zwischen den Waren W1, W2 des ersten und zweiten Kunden den Erfassungsbereich 141 der Sensoreinrichtung 14, wie in Fig. 1E dargestellt. Die RFID-Antenne 140 der Sensoreinrichtung 14 erfasst den Warentrenner 11A damit nicht mehr. Die Steuerungseinrichtung 15 stoppt in Reaktion darauf den ersten Bandabschnitt 100. Bevorzugt bringt die Steuerungseinrichtung 15 den ersten Bandabschnitt 100 innerhalb von 500 ms nach Verlassen des Erfassungsbereichs 141 durch den Warentrenner 11A zum Stillstand.

Dem Warentrenner 11A nachfolgende Waren W2 des zweiten Kunden verbleiben auf dem nun stillstehenden ersten Bandabschnitt 100. Der Warentrenner 11A hat den am ersten Bandabschnitt 100 und benachbart zum Übergang 102 angeordneten Erfassungsbereich 141 der Sensoreinrichtung 14 verlassen und befindet sich damit bereits auf dem zweiten Bandabschnitt 101. Die Waren W1 des ersten Kunden und der diesen Waren W1 nachfolgende Warentrenner 11A werden von dem weiterhin mit der Geschwindigkeit V2 betriebenen zweiten Bandabschnitt 101 zum Warenentnahmebereich 17 transportiert. Dabei passieren sie den Portalscanner 13.

In Fig. 1F haben alle Waren W1 des ersten Kunden und der nachfolgende Warentrenner 11A den Portalscanner 13 passiert und werden durch das die in den Figuren 1A-1F unten dargestellte Packmulde 172 verschließende bewegliche Barriereelement 171 in die oben dargestellte Packmulde 172 geleitet.

Der den Waren W1 des ersten Kunden folgende Warentrenner 11A hat in Fig. 1F den Erfassungsbereich 131 des Portalscanners 13 bereits passiert. Dabei wurde er von der RFID-Antenne 130 des Portalscanners 13 erfasst. Die von der RFID-Antenne 130 des Portalscanners 13 erfassten Informationen werden an die Steuerungseinrichtung 15 bereitgestellt. Daraufhin hat die Steuerungseinrichtung 15 den ersten Bandabschnitt 100 erneut in eine Vorschubbewegung mit der Geschwindigkeit V1 versetzt. Daraufhin beginnt der Transport der Waren W2 des zweiten Kunden durch den Portalscanner 13 analog zum vorstehend beschriebenen Transport der Waren W1 des ersten Kunden. Bevor die Waren W2 des zweiten Kunden den Warenentnahmebereich 17 erreichen, steuert die Steuerungseinrichtung 15 das bewegliche Barriereelement 171 derart an, dass es verschwenkt und die andere der beiden Packmulden 172 freigibt. So hat der erste Kunde genügend Zeit, seine Waren W1 aus dem Warenentnahmebereich 17 zu entnehmen.

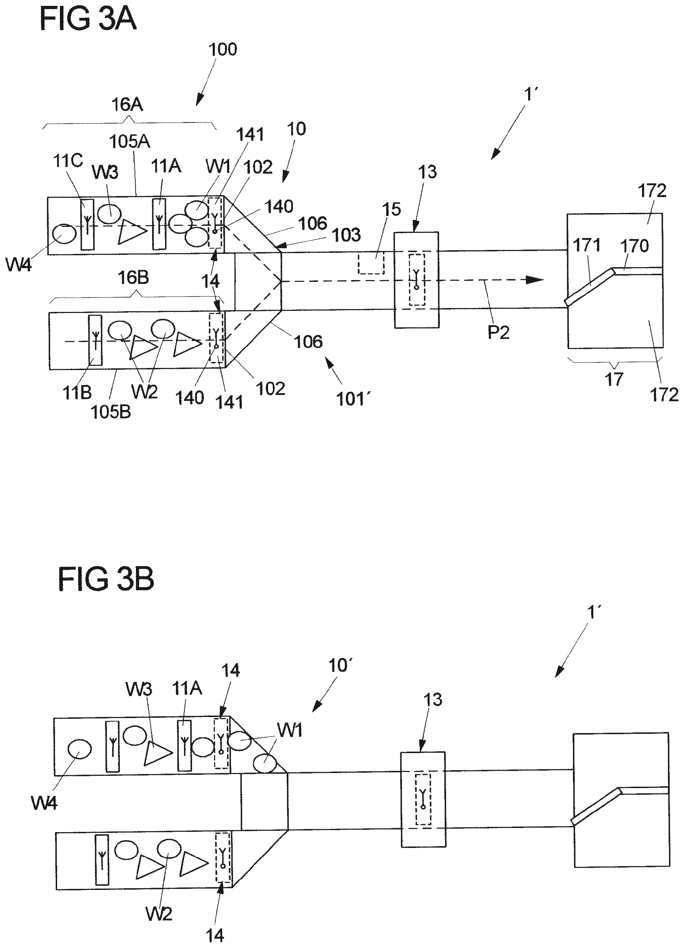

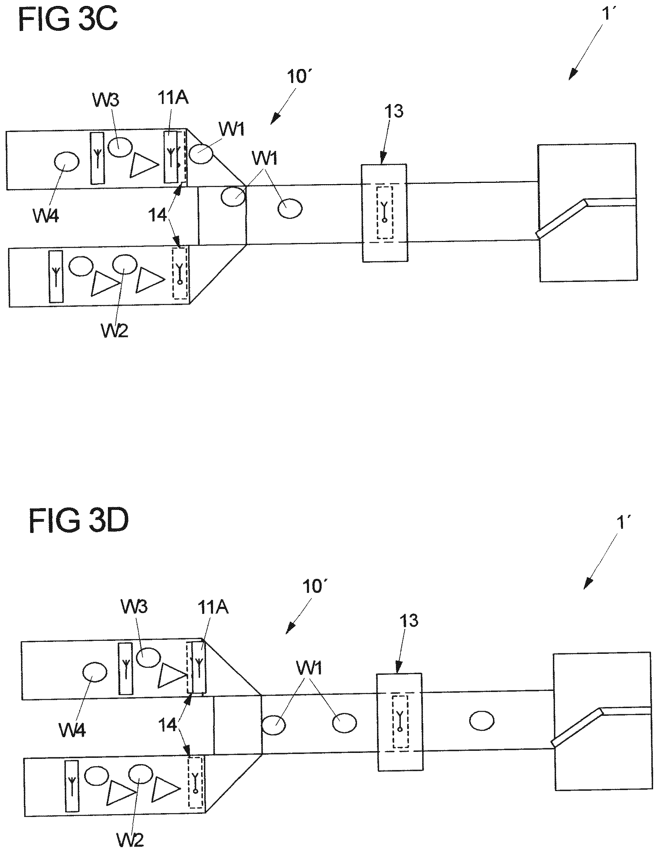

Fig. 3A-3I zeigen ein weiteres Ausführungsbeispiel einer Kassensystemanordnung 1' mit einer Transportbandvorrichtung 10'. Dieses entspricht in einigen Teilen dem Ausführungsbeispiel der Kassensystemanordnung 1 gemäß Fig. 1A-1F, wobei gleiche Bezugszeichen einander entsprechende Komponenten anzeigen, bezüglich deren Beschreibung auf die Beschreibung des Ausführungsbeispiels der Kassensystemanordnung 1 gemäß der Fig. 1A-1F verwiesen wird.

Die Kassensystemanordnung 1' gemäß Fig. 3A-3I umfasst einen ersten Bandabschnitt 100' mit einem ersten und einem zweiten Zufuhrband 105A, 105B und damit zwei Warenablagebereiche 16. Die beiden Zufuhrbänder 105A, 105B des ersten Bandabschnitts 100' sind im Wesentlichen parallel zueinander und zum Abtransportband 104 des zweiten Bandabschnitts 101' angeordnet.

Zur Verbindung der beiden Zufuhrbänder 105A, 105B des ersten Bandabschnitts 100' umfasst die Transportbandvorrichtung 10' der Kassensystemanordnung 1' einen einem zweiten Bandabschnitt 101' zugeordneten Verbindungsabschnitt 103.

Die Transportbandvorrichtung 10' bildet einen verzweigten Warenvorschubpfad P2 aus, der die beiden parallelen Zufuhrbänder 105A, 105B des ersten Bandabschnitts 100' mit dem zweiten Bandabschnitt 101' verbindet.

Zwischen jedem der beiden Zufuhrbänder 105A, 105B des ersten Bandabschnitts 100' und dem Verbindungsabschnitt 103 ist ein Übergang 102 ausgebildet. Waren W1-W4, die einen der Übergänge 102 überqueren, können durch den Verbindungsabschnitt 103 zum Abtransportband 104 transportiert werden. Der Verbindungsabschnitt 103 ist z.B. durch ein oder mehrere Transportbänder und/oder durch zumindest eine Rampe ausgebildet. Zur Führung der Waren W1-W4 sind am Verbindungsabschnitt 103 Schrägen 106 angeordnet. Die Schrägen 106 erstrecken sich jeweils zwischen einer seitlichen Kante eines Zufuhrbandes 105A, 105B bis zu einer seitlichen Kante des Abtransportbandes 104. Die Schrägen 106 dienen dazu, die Waren W1-W4 an Richtungsänderungen des Warenvorschubpfades P2 zu führen. Zudem dienen die Schrägen 106 dazu, Waren W1-W4, die auf der Transportbandvorrichtung 10' nebeneinander (quer zur Richtung des Warenvorschubs) positioniert sind, entlang des Warenvorschubpfades P2 hintereinander anzuordnen.

Benachbart zu jedem der Übergänge 102 ist an jedem der Zufuhrbänder 105A, 105B des ersten Bandabschnitts 100' eine Sensoreinrichtung 14 angeordnet.

Der Ablauf des Vorschubs von Waren W1-W4 vier verschiedener Kunden gestaltet sich wie nachfolgend beschrieben. Zunächst versetzt die Steuerungseinrichtung 15 einen der beiden Zufuhrbänder 105A, 105B des ersten Bandabschnitts 100' in eine Vorschubbewegung (mit der ersten Geschwindigkeit V1). Im vorliegenden Beispiel wird zunächst das oben dargestellte erste Zufuhrband 105A in eine Vorschubbewegung versetzt. Dadurch werden die Waren W1 des ersten Kunden über den Verbindungsabschnitt 103 zum Abtransportband 104 des zweiten Bandabschnitts 101' transportiert, vgl. Fig. 3A-3D.

Wenn der Warentrenner 11A zwischen den Waren W1, W3 des ersten und dritten Kunden in den Erfassungsbereich 141 der dem ersten Zufuhrband 105A des ersten Bandabschnitts 100' zugeordneten Sensoreinrichtung 14 eintritt, und die zugeordnete RFID-Antenne 140 den Warentrenner 11A erfasst, verlangsamt die Steuerungseinrichtung 15 die Vorschubgeschwindigkeit des ersten Bandabschnitts.

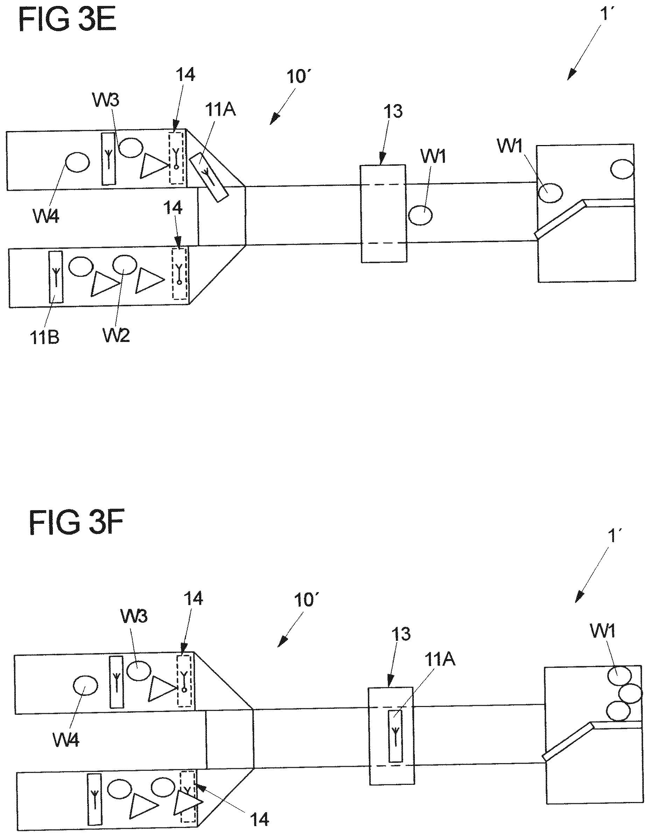

Sobald der Warentrenner 11A den Erfassungsbereich 141 der Sensoreinrichtung 14 wieder verlässt, stoppt die Steuerungseinrichtung 15 das erste Zufuhrband 105A des ersten Bandabschnitts 100', vgl. Fig. 3E.

Wenn der den Waren W1 des ersten Kunden folgende Warentrenner 11A in den Erfassungsbereich 131 des Portalscanners 13 transportiert und dort von der RFID-Antenne 130 des Portalscanners 13 erfasst wird, versetzt die Steuerungseinrichtung 15 das zweite Zufuhrband 105B des ersten Bandabschnitts 100' in eine Vorschubbewegung (mit der Geschwindigkeit V1), vgl. Fig. 3F.

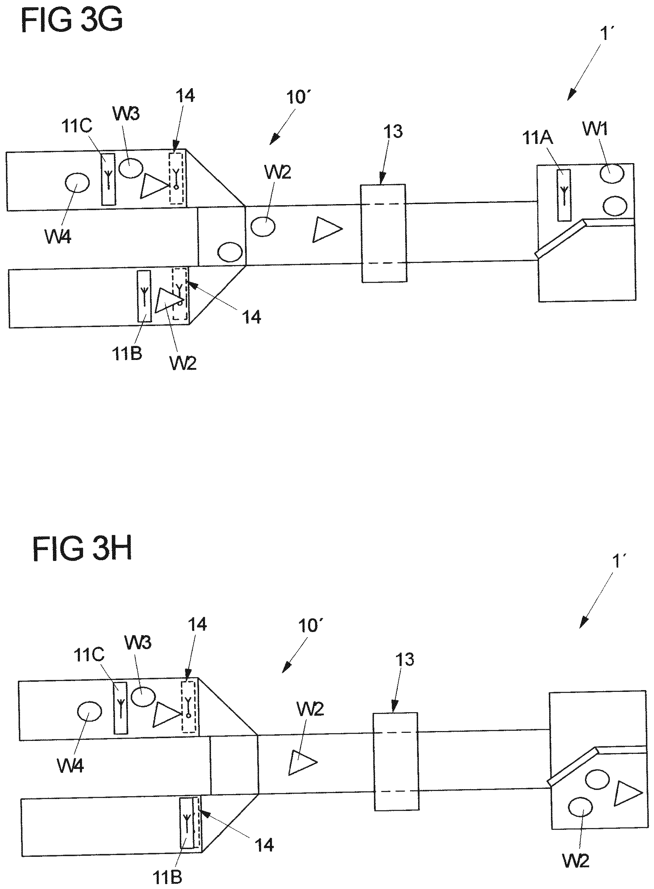

Daraufhin werden die Waren W2 des zweiten Kunden durch den Portalscanner 13 transportiert. Damit sich die Waren W1, W2 des ersten und des zweiten Kunden nicht im Warenentnahmebereich 17 vermischen, steuert die Steuerungseinrichtung 15 das bewegliche Barriereelement 171 an, sodass dieses verschwenkt und die Packmulde 172, in die die Waren W1 des ersten Kunden transportiert wurden, verschließt. Dies erfolgt, bevor die Waren W2 des zweiten Kunden am Warenentnahmebereich 17 ankommen, vgl. Fig. 3G. Die Waren W2 des zweiten Kunden werden dadurch von dem beweglichen Barriereelement 171 in die zweite Packmulde 172 transportiert.

Wird der den Waren W2 des zweiten Kunden nachfolgende Warentrenner 11B von der RFID-Antenne 140 im Erfassungsbereich 141 der dem zweiten Zufuhrband 105B zugeordneten Sensoreinrichtung 14 erfasst, reduziert die Steuerungseinrichtung 15 die Geschwindigkeit des zweiten Zufuhrbandes 105B, vgl. Fig. 3H.

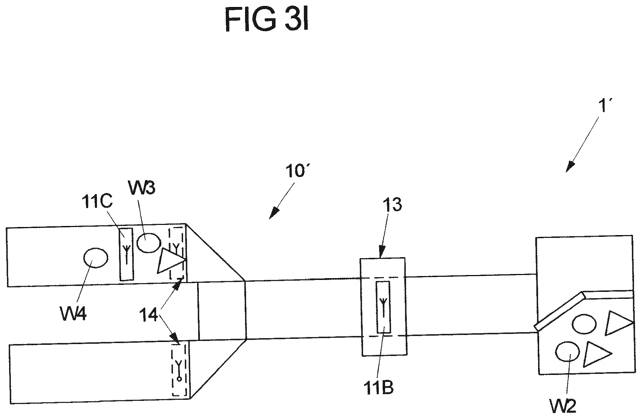

Verlässt der Warentrenner 11B den Erfassungsbereich 141, stoppt die Steuerungseinrichtung 15 das zweite Zufuhrband 105B, vgl. Fig. 3I.

Daraufhin wird mit dem Transport der Waren W3 des dritten Kunden analog zum Transport der Waren W1 des ersten Kunden verfahren.

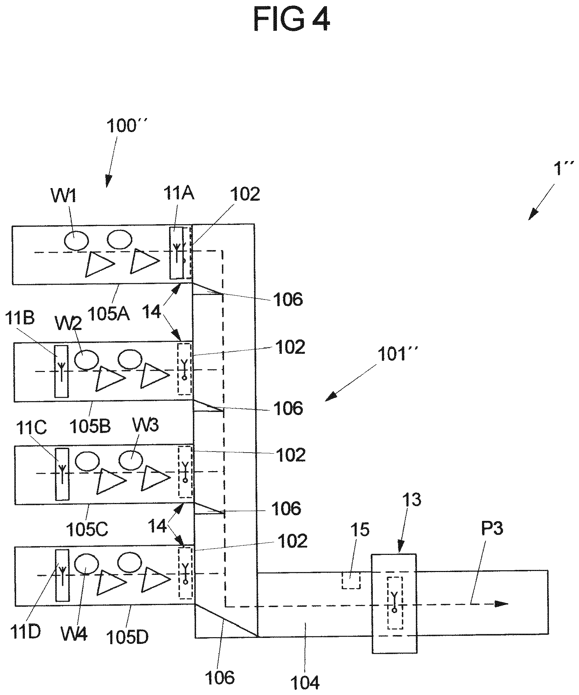

Fig. 4 zeigt ein weiteres Ausführungsbeispiel einer Kassensystemanordnung 1". Dieses entspricht in einigen Teilen den Ausführungsbeispielen der Kassensystemanordnung 1; 1' gemäß Fig. 1A-1F und Fig. 3A-3I, wobei gleiche Bezugszeichen einander entsprechende Komponenten anzeigen, bezüglich der auf die vorstehende Beschreibung verwiesen wird.

Die Kassensystemanordnung 1" der Fig. 4 umfasst einen verzweigten Warenvorschubpfad P3, der vorliegend vier Zufuhrbänder 105A-105D eines ersten Bandabschnitts 100" mit einem zweiten Bandabschnitt 101" verbindet. Der zweite Bandabschnitt umfasst hierzu einen Verbindungsabschnitt 103', welcher mit jedem der Zufuhrbänder 105A-105D des ersten Bandabschnitts 100" jeweils einen Übergang 102 ausbildet.

Am Verbindungsabschnitt 103' sind mehrere Schrägen 106 vorgesehen. Vorliegend ist jeweils eine Schräge 106 benachbart zu jedem der Übergänge 102 angeordnet. Wie in Fig. 4 zu erkennen, erstreckt sich jeweils eine Schräge 106 ausgehend von einer Ecke, an der jeder der Übergänge 102 auf eine (entlang der Vorschubrichtung seitlichen) Berandung der jeweiligen ersten Zufuhrbänder 105A-105D des ersten Bandabschnitts 100" stößt. Die Schrägen 106 sind zudem jeweils dort angeordnet, wo der Warenvorschubpfad P3 eine Richtungsänderung vollzieht. Der Verbindungsabschnitt 103' ist als Transportband ausgeführt.

Die Zufuhrbänder 105A-105D des ersten Bandabschnitts 100" sind im Wesentlichen parallel zum Abtransportband 104 und senkrecht zum Verbindungsabschnitt 103' ausgerichtet. Im Übrigen entsprechen die Zufuhrbänder 105A-105D im Wesentlichen den Zufuhrbändern 105; 105A, 105B der Ausführungsbeispiele der Kassensystemanordnungen 1; 1' gemäß den Fig. 1A-1F; 3A-3I. Auch bezüglich der Ausbildung und Funktionsweise des Portalscanners 13, der Sensoreinrichtungen 14 und der Steuerungseinrichtung 15 wird auf die dortige Beschreibung verwiesen.

Bei der Kassensystemanordnung 1" gemäß Fig. 4 können besonders viele Kunden zeitgleich ihre Waren W1-W4 auflegen. Die Waren W1-W4 werden nacheinander zum Portalscanner 13 transportiert. Dieser kann besonders effizient ausgelastet werden. Mehrere Warentrenner 11A-11D separieren Waren W1-W4 der Kunden auf den Zufuhrbändern 105A-105D von Waren vorangehender oder nachfolgender Kunden.

An die Kassensystemanordnung 1" kann sich optional ein hier nicht dargestellter Warenentnahmebereich 17 anschließen.

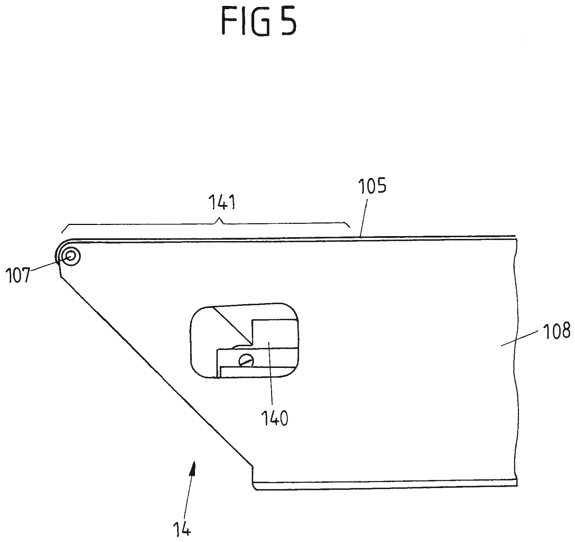

Fig. 5 zeigt eine seitliche Ansicht auf den Endbereich des Zufuhrbandes 105 des ersten Bandabschnitts 100; 100'; 100", der in den vorstehend beschriebenen Ausführungsbeispiele der Kassensystemanordnungen 1; 1'; 1" an den jeweiligen zweiten Bandabschnitt 101; 101'; 101" angrenzt (und damit jeweils einen Übergang 102 ausbildet). An dieser Stelle wird das Zufuhrband 105 an einer Umlenkrolle 107 umgelenkt. Die Umlenkrolle 107 ist an einem Rahmen 108 angelenkt. Der Rahmen 108 ist aus einem Metall, z.B. aus Aluminium- oder Stahlblech hergestellt.

In der Ansicht der Fig. 5 ist zu erkennen, dass die RFID-Antenne 140 der Sensoreinrichtung 14 unter dem Zufuhrband 105 angeordnet ist. Auch ist es in einem Abstand zu dem Zufuhrband 105 angeordnet. Der Abstand beträgt zwischen 1,5 cm und 10 cm. Bei einem solchen Abstand ist eine Erkennung eines RFID-Tags 110 eines Warentrenners 11A-11D bis zu etwa 2,5 cm über dem Zufuhrband 105 möglich.

Die RFID-Antenne 141 ist höhenverstellbar vorgesehen (sodass der Abstand zum Zufuhrband 105 einstellbar ist). So kann eine möglichst genaue Erfassung von RFID-Tags gewährleistet werden.

Die RFID-Antenne 140 erstreckt sich im Wesentlichen über die gesamte Breite des Zufuhrbandes 105. Dabei kann die RFID-Antenne 140 jedoch etwas schmaler sein als das Zufuhrband 105 (z.B. etwa 2 cm). Bevorzugt besteht zwischen der RFID-Antenne 140 und dem Rahmen 108 beidseitig ein Abstand von etwa 1 cm. Dadurch können Warentrenner 11A-11D seitlich am Zufuhrband 105 zurückgeführt werden, ohne durch die RFID-Antenne erfasst zu werden. So kommt es bei einem Zurückführen eines Warentrenners (wie an Kassensystemen üblich) nicht zu einer Störung der Kassensystemanordnung 1; 1'; 1".

Der Erfassungsbereich 141 der Sensoranordnung 14 erstreckt sich (im bestimmungsgemäßen Gebrauch) oberhalb der RFID-Antenne 140. Zum Schutz der RFID-Antenne 140 (z.B. vor eindringenden Flüssigkeiten) ist ein hier nicht dargestelltes Kunststofffenster (z.B. aus Plexiglas, Polycarbonat, Verbundwerkstoff HPL, o.ä.) zwischen der RFID-Antenne und dem Zufuhrband 105 angeordnet.

Die RFID-Antenne 141 ist gegen Störungen durch andere Komponenten der Kassensystemanordnung (z.B. einen Transportband-Motor) mittels einer geeigneten Schirmung abgeschirmt, z.B. durch Verwendung geschirmter und/oder mit Ferritkernen versehener Kabelverbindungen.

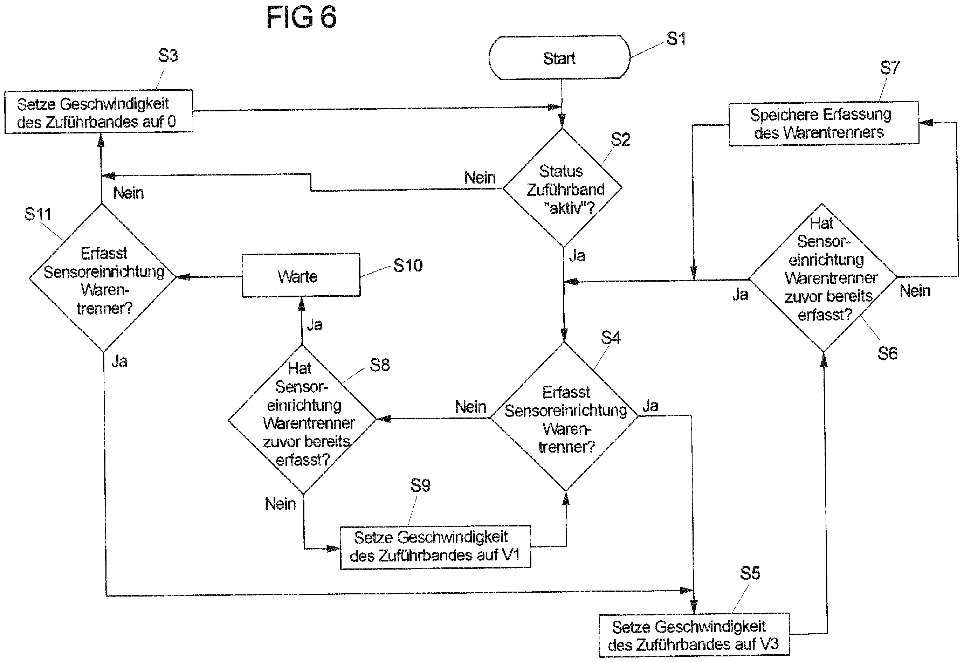

Fig. 6 zeigt ein Ablaufdiagramm, gemäß dem jedes Zuführband der vorstehend beschriebenen Kassensystemanordnungen 1, 1', 1" mittels der Steuerungseinrichtung 15 gesteuert werden kann.

Zunächst wird die Steuerungseinrichtung 15 aktiviert (Schritt S1). Falls die gesteuerte Kassensystemanordnung mehr als ein Zuführband umfasst, ist zur gleichen Zeit nur eines der Zuführbänder aktiv, um Waren zum Abtransportband zu transportieren. In Schritt S2 wird geprüft, ob der Status des zu steuernden Zuführbandes aktuell "aktiv" ist. Ist dies nicht der Fall, wird die Geschwindigkeit des Zuführbandes in Schritt S3 auf null gesetzt (oder bei null gehalten), woraufhin erneut bei Schritt S2 fortgefahren wird. Das Zuführband wird also gestoppt oder im Stillstand belassen. Ist der Status des Zuführbandes hingegen auf "aktiv", beginnt ein Transportvorgang (beginnend mit Schritt S4).

Das Setzen des Status des Zuführbandes auf "aktiv" erfolgt z.B. manuell über die Steuerungseinrichtung 15 (z.B. einer SPS), etwa durch Eingabe eines Bedieners. Insbesondere besteht das Setzen des Status des Zuführbandes auf "aktiv" in dem Setzen eines entsprechendes Statusindikators ("Flags") der Steuerungseinrichtung 15. Denkbar ist auch, dass das Setzen des Flags auf "aktiv" automatisch bei Eintritt eines Ereignisses erfolgt, z.B. bei einer (z.B. mittels eines Näherungssensors) detektierten Annäherung eines Kunden an die Kassensystemanordnung. Das Flag wird immer nur gesetzt, wenn ein Kaufvorgang beginnen soll.

In Schritt S4 wird geprüft, ob die Sensoreinrichtung 14 aktuell einen Warentrenner 11A-11D erfasst.

Wird in Schritt S4 von der Sensoreinrichtung 14 aktuell ein Warentrenner 11A-11D erfasst, so wird mit Schritt S5 fortgefahren.

Wird in Schritt S4 von der Sensoreinrichtung 14 aktuell kein Warentrenner 11A-11D erfasst, so wird mit Schritt S8 fortgefahren. Dort wird durch Abfrage eines dafür vorgesehenen Speichers geprüft, ob die Sensoreinrichtung 14 im aktuellen Transportvorgang bereits einmal einen Warentrenner 11A-11D erfasst hat. Hat sie im aktuellen Transportvorgang noch keinen Warentrenner 11A-11D erfasst, wird die Geschwindigkeit des Zuführbandes in Schritt S9 auf V1 gesetzt und mit Schritt S4 fortgefahren. Die Geschwindigkeit V1 beträgt z.B. zwischen 20 cm/s und 22 cm/s.

Wird in Schritt S8 durch Abfrage des Speichers erkannt, dass im aktuellen Transportvorgang bereits zumindest einmal ein Warentrenner 11A-11D durch die Sensoreinrichtung 14 erfasst wurde, pausiert die Steuerungseinrichtung 15 in Schritt S10, z.B. für 500 ms oder für bis zu 500 ms. Danach wird mit Schritt S11 fortgefahren.

Wird in Schritt S11 wieder ein Warentrenner von der Sensoreinrichtung 14 erfasst, so wird mit Schritt S5 fortgefahren. Auf diese Weise werden kurze Unterbrechungen bei der Erfassung des Warentrenners 11A-11D berücksichtigt.

Wird in Schritt S11 kein Warentrenner 11A-11D von der Sensoreinrichtung 14 erfasst, so setzt die Steuerungseinrichtung 15 die Geschwindigkeit des Zuführbandes auf null (oder hält sie auf null) und geht zu Schritt S2. In Schritt S5 wird das Zuführband in eine Geschwindigkeit V3 versetzt. Die Geschwindigkeit V3 beträgt z.B. zwischen 10 cm/s und 12 cm/s. Daraufhin wird bei Schritt S6 fortgefahren. In Schritt S6 wird durch Abfrage des Speichers geprüft, ob die Sensoreinrichtung 14 im aktuellen Transportvorgang bereits einmal einen Warentrenner 11A-11D erfasst hat. Wurde der Warentrenner 11A-11D zuvor noch nicht erfasst, wird in dem Speicher die Information in Schritt S7 hinterlegt, dass nun ein Warentrenner 11A-11D erfasst wurde. Daraufhin wird erneut mit Schritt S4 weiter verfahren.

Die Erfindung beschränkt sich in ihrer Ausgestaltung nicht auf die vorstehend dargestellten Ausführungsbeispiele, die lediglich beispielhaft zu verstehen sind. So kann eine Kassensystemanordnung beispielsweise auch eine hier nicht dargestellte Anzahl von Transportbändern der ersten Bandabschnitte aufweisen, z.B. drei, fünf oder sechs. Zudem kommt es nicht darauf an, dass die Transportbänder der ersten Bandabschnitte der Kassensystemanordnungen parallel zueinander angeordnet sind.

Generell kann auch anstelle eines Portalscanners eine andere Art der Warenerfassungseinrichtung eingesetzt werden. Zum Beispiel können die Waren RFID-Tags umfassen und mittels der RFID-Antenne der Warenerfassungseinrichtung erfasst werden. Alternativ kann als Warenerfassungseinrichtung auch eine klassische, von Personal bediente Erfassungsstation eingesetzt werden.

Ferner sei angemerkt, dass der Sensor (die RFID-Antenne) der Sensoreinrichtung nicht zwingend unter dem Transportband angeordnet sein muss, sondern alternativ generell auch über dem Transportband angeordnet sein kann.

Weiter sei angemerkt, dass anstelle eines RFID-Tags auch andere maschinenlesbare Codes an Warentrennern angebracht werden können, die dann von einer entsprechenden anderen Art von Sensor ausgelesen werden. Beispielsweise kann der maschinenlesbare Code als Strichcode, als QR-Code oder als sonstiger, detektierbarer (etwa sichtbarer) Marker (z.B. in Form einer Grafik, eines eindeutigen Musters oder Bilds) oder in Form eines (insbesondere durch das menschliche Auge nicht wahrnehmbaren) digitalen Wasserzeichens (etwa der Fa. DigiMarc, Portland, USA) ausgebildet werden. Als Sensor dient dann eine optische Erfassungseinheit.

Um die RFID-Antenne gegen elektromagnetische Störfelder zu schützen, die die Zuverlässigkeit der Erfassung der RFID-Tags beeinflussen könnten, kann die RFID-Antenne innerhalb eines einseitig geöffneten Ferritkäfigs oder -gehäuses angeordnet sein. Die offene Seite des Ferritkäfigs oder -gehäuses weist z.B. in Richtung des Erfassungsbereichs. Ist die RFID-Antenne unterhalb des Zuführbandes angeordnet, kann die offene Seite z.B. nach oben weisen. Das Ferritgehäuse kann insbesondere in Form eines Quaders aus Ferritplatten ausgebildet sein. Die Größe der Öffnung des Ferritkäfigs oder - gehäuses kann einstellbar sein.

Die Größe des Erfassungsbereichs kann z.B. von den spezifischen Eigenschaften der RFID-Antenne abhängen. Ferner kann die Größe des Erfassungsbereichs eingestellt werden, indem z.B. die Größe der Öffnung eines Ferritkäfigs oder -gehäuses eingestellt wird und/oder indem ein Fenster oder eine Begrenzung aus Metall, insbesondere Metallplatten zwischen der RFID-Antenne und dem Zuführband angeordnet wird.

### Bezugszeichenliste

- 1, 1', 1": Kassensystemanordnung
- 10, 10', 10": Transportbandvorrichtung
- 100, 100', 100": erster Bandabschnitt
- 101, 101', 101": zweiter Bandabschnitt
- 102: Übergang
- 103, 103': Verbindungsabschnitt
- 104: Abtransportband
- 105, 105A-105D: Zufuhrband
- 106: Schräge
- 107: Umlenkrolle
- 108: Rahmen
- 11A-11D: Warentrenner
- 110: RFID-Tag
- 13: Portalscanner (Warenerfassungseinrichtung)
- 130: RFID-Antenne (Sensor)
- 131: Erfassungsbereich
- 14: Sensoreinrichtung
- 140: RFID-Antenne (Sensor)
- 141: Erfassungsbereich
- 15: Steuerungseinrichtung
- 16, 16A, 16B: Warenablagebereich
- 17: Warenentnahmebereich
- 170: unbewegliches Barriereelement
- 171: bewegliches Barriereelement
- 172: Packmulde
- M1, M2: Motor
- P1-P3: Warenvorschubpfad
- W1-W4: Waren

## Patentansprüche

1. Kassensystemanordnung mit:
- einer Transportbandvorrichtung (10; 10'; 10") mit mindestens einem Bandabschnitt (100, 101; 100', 101'; 100", 101"), der zum Transport von darauf befindlichen Waren (W1-W4) entlang eines Warenvorschubpfades (P1-P3) in eine Vorschubbewegung versetzt werden kann, wobei die Waren (W1-W4) entlang des Warenvorschubpfades (P1-P3) voneinander durch mindestens einen Warentrenner (11A-11D) separierbar sind, und
- einer Warenerfassungseinrichtung (13) zur Erfassung von mittels der Transportbandvorrichtung (10; 10'; 10") transportierten Waren (W1-W4),
- mehreren entlang des Warenvorschubpfades (P1-P3) von der Warenerfassungseinrichtung (13) beabstandete Sensoreinrichtungen (14) mit jeweils einem Sensor (140) und einem Erfassungsbereich (141), wobei die Sensoreinrichtungen (14) jeweils ausgebildet sind, mittels des Sensors (140) zu erfassen, ob sich der Warentrenner (11A-11D) im Erfassungsbereich (141) befindet, und
- einer Steuerungseinrichtung (15), die ausgebildet ist, in Abhängigkeit von der Erfassung des Warentrenners (11A-11D) im Erfassungsbereich (141) der Sensoreinrichtungen (14) die Vorschubbewegung des Bandabschnitts (100, 101; 100', 101'; 100", 101") der Transportbandvorrichtung (10; 10'; 10") zu steuern,
- wobei die Transportvorrichtung mindestens einen ersten Bandabschnitt (100; 100'; 100"), der zum Ablegen von Waren (W1-W4) ausgebildet ist, und einen zweiten Bandabschnitt (101; 101'; 101") aufweist, wobei der erste Bandabschnitt (100; 100'; 100") an mehreren Übergängen (102) an den zweiten Bandabschnitt (101; 101'; 101") angrenzt,
- und wobei die Steuerungseinrichtung (15) ausgebildet ist, den ersten Bandabschnitt (100; 100'; 100") in eine Vorschubbewegung mit einer ersten Geschwindigkeit und den zweiten Bandabschnitt (101; 101'; 101") in eine Vorschubbewegung mit einer zweiten Geschwindigkeit zu versetzen,
**dadurch gekennzeichnet, dass**
- der erste Bandabschnitt (100; 100'; 100") mehrere Zufuhrbänder (105A-105D) umfasst, die mit dem zweiten Bandabschnitt (101; 101'; 101") derart verbunden sind, dass Waren von den Zufuhrbändern (105A-105D) an den zweiten Bandabschnitt (101; 101'; 101") und von diesem weitertransportiert werden können,
- der zweite Bandabschnitt (101; 101'; 101") zum Transport der auf dem ersten Bandabschnitt (100; 100'; 100") abgelegten Waren (W1-W4) in den Erfassungsbereich (130) der Warenerfassungseinrichtung (13) ausgebildet ist,
- die Zufuhrbänder (105A-105D) über einen als Transportband ausgeführten Verbindungsabschnitt (103, 103') des zweiten Bandabschnitts (101; 101'; 101") verbunden sind, wobei zwischen jedem der Zufuhrbänder (105A-105D) und dem Verbindungsabschnitt (103, 103') ein Übergang (102) ausgebildet ist,
- benachbart zu jedem der Übergange (102) eine der Sensoreinrichtungen (14) angeordnet ist, wobei der Erfassungsbereich (141) der Sensoreinrichtungen (14) an dem jeweiligen Übergang (102) angeordnet ist,
- die Steuerungseinrichtung (15) zur Steuerung der Geschwindigkeiten des ersten und des zweiten Bandabschnitts (100; 100'; 100", 101; 101'; 101") in Abhängigkeit von der Erfassung des Warentrenners (11A-11D) im Erfassungsbereich der Sensoreinrichtung (14) ausgebildet ist;
- die Sensoreinrichtungen (14) jeweils ausgebildet sind, durch Auslesen eines an einem auf dem Zufuhrband (105A-105D, dem die Sensoreinrichtung (14) zugeordnet ist, befindlichen Warentrenner (11A-11D) vorgesehenen maschinenlesbaren Codes mittels des Sensors (140) zu erfassen, ob sich der Warentrenner (11A-11D) im Erfassungsbereich (141) befindet, und
- die Steuerungseinrichtung (15) ausgebildet ist,
- eine Geschwindigkeit der Vorschubbewegung des Zufuhrbands (105A-105D) zu reduzieren, während sich der Warentrenner (11A-11D) im Erfassungsbereich (141) der Sensoreinrichtung (14) befindet; und
- das Zufuhrband (105A-105D) zu stoppen, sobald der Warentrenner (11A-11D) den Erfassungsbereich (141) der Sensoreinrichtung (14) verlässt.

2. Kassensystemanordnung nach Anspruch 1, **dadurch gekennzeichnet, dass** die Warenerfassungseinrichtung (13) als Portalscanner ausgebildet ist.

3. Kassensystemanordnung nach einem der vorhergehenden Ansprüche, **dadurch gekennzeichnet, dass** der am Warentrenner (11A-11D) vorgesehene maschinenlesbare Code mit Hilfe eines von dem Sensor (140) der Sensoreinrichtung (14) erzeugten elektromagnetischen Feldes ausgelesen wird.

4. Kassensystemanordnung nach einem der vorhergehenden Ansprüche, **dadurch gekennzeichnet, dass** der am Warentrenner (11A-11D) vorgesehene maschinenlesbare Code durch einen RFID-Tag (110) bereitgestellt wird und dass der Sensor (140) der Sensoreinrichtung (14) als RFID-Antenne zum Auslesen des RFID-Tags (110) des Warentrenners (11A-11D) ausgebildet ist.

5. Kassensystemanordnung nach einem der vorhergehenden Ansprüche, **dadurch gekennzeichnet, dass** der am Warentrenner (11A-11D) vorgesehene maschinenlesbare Code als Strichcode, QR-Code, Grafik, Muster und/oder digitales Wasserzeichen ausgebildet ist.

6. Kassensystemanordnung nach einem der vorangehenden Ansprüche, **gekennzeichnet durch** mehrere Warentrenner (11A-11D), wobei die mehreren Warentrenner (11A-11D) anhand der an den Warentrennern (11A-11D) vorgesehenen maschinenlesbaren Codes eindeutig identifizierbar sind.

7. Kassensystemanordnung nach einem der vorhergehenden Ansprüche, **dadurch gekennzeichnet, dass** die zweite Geschwindigkeit größer ist als die erste Geschwindigkeit.

8. Verfahren zum Betreiben einer Kassensystemanordnung, die
- eine Transportbandvorrichtung (10; 10'; 10") mit mindestens einem Bandabschnitt (100, 101; 100', 101'; 100", 101"), der zum Transport von darauf befindlichen Waren (W1-W4) entlang eines Warenvorschubpfades (P1-P3) in eine Vorschubbewegung versetzt werden kann, wobei die Waren (W1-W4) entlang des Warenvorschubpfades (P1-P3) voneinander durch mindestens einen Warentrenner (11A-11D) separierbar sind, und
- eine Warenerfassungseinrichtung (13) zur Erfassung von mittels der Transportbandvorrichtung (10; 10'; 10") transportierten Waren (W1-W4),
- mehrere entlang des Warenvorschubpfades (P1-P3) von der Warenerfassungseinrichtung (13) beabstandet angeordnete Sensoreinrichtungen (14) mit jeweils einem Sensor (140) und einem Erfassungsbereich (141), und
- eine Steuerungseinrichtung (15)
umfasst,
wobei die Sensoreinrichtungen (14) mittels des Sensors (140) jeweils erfassen, ob sich der Warentrenner (11A-11D) im Erfassungsbereich (141) befindet, und die Steuerungseinrichtung (15) in Abhängigkeit von der Erfassung des Warentrenners (11A-11D) im Erfassungsbereich (141) der Sensoreinrichtungen (14) die Vorschubbewegung des Bandabschnitts (100, 101; 100', 101'; 100", 101") der Transportbandvorrichtung (10; 10'; 10") steuert,
wobei die Transportvorrichtung mindestens einen ersten Bandabschnitt (100; 100'; 100"), der zum Ablegen von Waren (W1-W4) ausgebildet ist, und einen zweiten Bandabschnitt (101; 101'; 101"), der zum Transport der auf dem ersten Bandabschnitt (100; 100'; 100") abgelegten Waren (W1-W4) in den Erfassungsbereich (130) der Warenerfassungseinrichtung (13) ausgebildet ist, aufweist, wobei der erste Bandabschnitt (100; 100'; 100") an einem Übergang (102) an den zweiten Bandabschnitt (101; 101'; 101") angrenzt,
und wobei die Steuerungseinrichtung (15) den ersten Bandabschnitt (100; 100'; 100") in eine Vorschubbewegung mit einer ersten Geschwindigkeit und den zweiten Bandabschnitt (101; 101'; 101") in eine Vorschubbewegung mit einer zweiten Geschwindigkeit versetzt,
**dadurch gekennzeichnet, dass**
- der erste Bandabschnitt (100; 100'; 100") mehrere Zufuhrbänder (105A-105D) umfasst, die mit dem zweiten Bandabschnitt (101; 101'; 101") derart verbunden sind, dass Waren von den Zufuhrbändern (105A-105D) an den zweiten Bandabschnitt (101; 101'; 101") und von diesem weitertransportiert werden können,
- der zweite Bandabschnitt (101; 101'; 101") zum Transport der auf dem ersten Bandabschnitt (100; 100'; 100") abgelegten Waren (W1-W4) in den Erfassungsbereich (130) der Warenerfassungseinrichtung (13) ausgebildet ist,
- die Zufuhrbänder (105A-105D) über einen als Transportband ausgeführten Verbindungsabschnitt (103, 103') des zweiten Bandabschnitts (101; 101'; 101") verbunden sind, wobei zwischen jedem der Zufuhrbänder (105A-105D) und dem Verbindungsabschnitt (103, 103') ein Übergang (102) ausgebildet ist,
- benachbart zu jedem der Übergange (102) eine der Sensoreinrichtungen (14) angeordnet ist, wobei der Erfassungsbereich (141) der Sensoreinrichtung (14) an dem jeweiligen Übergang (102) angeordnet ist,
- die Steuerung der Geschwindigkeiten des ersten und des zweiten Bandabschnitts (100; 100'; 100", 101; 101'; 101") in Abhängigkeit von der Erfassung des Warentrenners (11A-11D) im Erfassungsbereich der Sensoreinrichtung (14) erfolgt;
- Auslesen eines an einem auf dem Zufuhrband (105A-105D), dem die Sensoreinrichtung (14) zugeordnet ist, befindlichen Warentrenner (11A-11D) vorgesehenen maschinenlesbaren Codes durch die Sensoreinrichtung (14) mittels des Sensors (140) um zu erfassen, ob sich der Warentrenner (11A-11D) im Erfassungsbereich (141) befindet;
- Reduzieren einer Geschwindigkeit der Vorschubbewegung des Zufuhrbands (105A-105D) während sich der Warentrenner (11A-11D) im Erfassungsbereich (141) der Sensoreinrichtung (14) befindet; und
- Stoppen des Zufuhrbands (105A-105D) sobald der Warentrenner (11A-11D) den Erfassungsbereich (141) der Sensoreinrichtung (14) verlässt.

## Claims

1. Checkout system assembly, having:
- a transport belt apparatus (10; 10'; 10") having at least one belt section (100, 101; 100', 101'; 100", 101"), which can be set into a forward-feed movement for transporting goods (W1-W4), which are located thereon, along a goods forward-feed path (P1-P3), wherein the goods (W1-W4) are separable from one another along the goods forward-feed path (P1-P3) by at least one goods separator (11A-11D), and
- a goods capturing device (13) for capturing goods (W1-W4) that are transported by means of the transport belt apparatus (10; 10'; 10"),
- a plurality of sensor devices (14), which are located at a distance from the goods capturing device (13) along the goods forward-feed path (P1-P3), having in each case a sensor (140) and a capturing region (141), wherein the sensor devices (14) are in each case embodied to capture, by means of the sensor (140), whether the goods separator (11A-11D) is located in the capturing region (141), and
- a control device (15), which is embodied to control the forward-feed movement of the belt section (100, 101; 100', 101'; 100", 101") of the transport belt apparatus (10; 10'; 10") in dependence on the capturing of the goods separator (11A-11D) in the capturing region (141) of the sensor devices (14),
- wherein the transport apparatus has at least a first belt section (100; 100'; 100"), which is embodied for the placement of goods (W1-W4), and a second belt section (101; 101'; 101"), wherein the first belt section (100; 100'; 100") adjoins the second belt section (101; 101'; 101") at a plurality of transitions (102),
- and wherein the control device (15) is embodied to set the first belt section (100; 100'; 100") into a forward-feed movement at a first speed and to set the second belt section (101; 101'; 101") into a forward-feed movement at a second speed,
**characterized in that**
- the first belt section (100; 100'; 100") comprises a plurality of supply belts (105A-105D) that are connected to the second belt section (101; 101'; 101") such that goods can be transported from the supply belts (105A-105D) to the second belt section (101; 101'; 101") and transported further from there,
- the second belt section (101; 101'; 101") is embodied for transporting the goods (W1-W4), which have been placed on the first belt section (100; 100'; 100"), into the capturing region (130) of the goods capturing device (13),
- the supply belts (105A-105D) are connected via a connection section (103, 103') of the second belt section (101; 101'; 101") that is designed as a transport belt, wherein a transition (102) is formed between each of the supply belts (105A-105D) and the connection section (103, 103'),
- one of the sensor devices (14) is arranged adjacent to each of the transitions (102), wherein the capturing region (141) of the sensor devices (14) is arranged at the respective transition (102),
- the control device (15) is embodied for controlling the speeds of the first and second belt sections (100; 100'; 100", 101; 101'; 101") in dependence on the capturing of the goods separator (11A-11D) in the capturing region of the sensor device (14);
- the sensor devices (14) are embodied in each case to capture, by means of the sensor (140), by reading a machine-readable code provided on a goods separator (11A-11D) that is located on the supply belt (105A-105D), to which the sensor device (14) is assigned, whether the goods separator (11A-11D) is located in the capturing region (141), and
- the control device (15) is embodied
- to reduce a speed of the forward-feed movement of the supply belt (105A-105D) while the goods separator (11A-11D) is located in the capturing region (141) of the sensor device (14); and
- to stop the supply belt (105A-105D) as soon as the goods separator (11A-11D) leaves the capturing region (141) of the sensor device (14).

2. Checkout system assembly according to Claim 1, **characterized in that** the goods capturing device (13) is embodied in the form of a portal scanner.

3. Checkout system assembly according to either of the preceding claims, **characterized in that** the machine-readable code provided on the goods separator (11A-11D) is read with the aid of an electromagnetic field generated by the sensor (140) of the sensor device (14).

4. Checkout system assembly according to one of the preceding claims, **characterized in that** the machine-readable code provided on the goods separator (11A-11D) is provided by an RFID tag (110) and **in that** the sensor (140) of the sensor device (14) is embodied in the form of an RFID antenna for reading the RFID tag (110) of the goods separator (11A-11D).

5. Checkout system assembly according to one of the preceding claims, **characterized in that** the machine-readable code provided on the goods separator (11A-11D) is embodied in the form of a barcode, QR code, graphic, pattern and/or digital watermark.

6. Checkout system assembly according to one of the preceding claims, **characterized by** a plurality of goods separators (11A-11D), wherein the plurality of goods separators (11A-11D) are uniquely identifiable from the machine-readable codes provided on the goods separators (11A-11D) .

7. Checkout system assembly according to one of the preceding claims, **characterized in that** the second speed is greater than the first speed.

8. Method for operating a checkout system assembly, comprising
- a transport belt apparatus (10; 10'; 10") having at least one belt section (100, 101; 100', 101'; 100", 101"), which can be set into a forward-feed movement for transporting goods (W1-W4), which are located thereon, along a goods forward-feed path (P1-P3), wherein the goods (W1-W4) are separable from one another along the goods forward-feed path (P1-P3) by at least one goods separator (11A-11D), and
- a goods capturing device (13) for capturing goods (W1-W4) that are transported by means of the transport belt apparatus (10; 10'; 10"),
- a plurality of sensor devices (14), which are arranged at a distance from the goods capturing device (13) along the goods forward-feed path (P1-P3), having in each case a sensor (140) and a capturing region (141), and
- a control device (15),
wherein the sensor devices (14) capture in each case by means of the sensor (140) whether the goods separator (11A-11D) is located in the capturing region (141), and the control device (15) controls the forward-feed movement of the belt section (100, 101; 100', 101'; 100", 101") of the transport belt apparatus (10; 10'; 10") in dependence on the capturing of the goods separator (11A-11D) in the capturing region (141) of the sensor devices (14),
wherein the transport apparatus has at least a first belt section (100; 100'; 100"), which is embodied for the placement of goods (W1-W4), and a second belt section (101; 101'; 101"), which is embodied for transporting the goods (W1-W4), which have been placed on the first belt section (100; 100'; 100"), into the capturing region (130) of the goods capturing device (13), wherein the first belt section (100; 100'; 100") adjoins the second belt section (101; 101'; 101") at a transition (102),
- and wherein the control device (15) sets the first belt section (100; 100'; 100") into a forward-feed movement at a first speed and sets the second belt section (101; 101'; 101") into a forward-feed movement at a second speed,
**characterized in that**
- the first belt section (100; 100'; 100") comprises a plurality of supply belts (105A-105D) that are connected to the second belt section (101; 101'; 101") such that goods can be transported from the supply belts (105A-105D) to the second belt section (101; 101'; 101") and transported further from there,
- the second belt section (101; 101'; 101") is embodied for transporting the goods (W1-W4), which have been placed on the first belt section (100; 100'; 100"), into the capturing region (130) of the goods capturing device (13),
- the supply belts (105A-105D) are connected via a connection section (103, 103') of the second belt section (101; 101'; 101") that is designed as a transport belt, wherein a transition (102) is formed between each of the supply belts (105A-105D) and the connection section (103, 103'),
- one of the sensor devices (14) is arranged adjacent to each of the transitions (102), wherein the capturing region (141) of the sensor devices (14) is arranged at the respective transition (102),
- controlling the speeds of the first and second belt sections (100; 100'; 100", 101; 101'; 101") is effected in dependence on the capturing of the goods separator (11A-11D) in the capturing region of the sensor device (14) ;
- reading a machine-readable code provided on a goods separator (11A-11D) that is located on the supply belt (105A-105D), to which the sensor device (14) is assigned, by way of the sensor device (14) by means of the sensor (140) so as to capture whether the goods separator (11A-11D) is located in the capturing region (141);
- reducing a speed of the forward-feed movement of the supply belt (105A-105D) while the goods separator (11A-11D) is located in the capturing region (141) of the sensor device (14); and
- stopping the supply belt (105A-105D) as soon as the goods separator (11A-11D) leaves the capturing region (141) of the sensor device (14).

## Revendications

1. Arrangement de système de caisse, comprenant :
- un équipement de bande transporteuse (10 ; 10' ; 10") comprenant au moins une portion de bande (100, 101 ; 100', 101' ; 100", 101"), laquelle peut être mise dans un mouvement d'avance en vue de transporter des marchandises (W1-W4) qui se trouvent sur celle-ci le long d'un chemin d'avance de marchandises (P1-P3), les marchandises (W1-W4) pouvant être séparées les unes des autres le long du chemin d'avance de marchandises (P1-P3) par au moins un séparateur de marchandises (11A-11D), et
- un dispositif de détection de marchandises (13) destiné à détecter des marchandises (W1-W4) transportées au moyen de l'équipement de bande transporteuse (10 ; 10'; 10"),
- plusieurs dispositifs capteurs (14) espacés du dispositif de détection de marchandises (13) le long du chemin d'avance de marchandises (P1-P3) comprenant chacun un capteur (140) et une zone de détection (141), les dispositifs capteurs (14) étant respectivement configurés pour détecter, au moyen du capteur (140), si le séparateur de marchandises (11A-11D) se trouve dans la zone de détection (141), et
- un dispositif de commande (15), qui est configuré pour commander le mouvement d'avance de la portion de bande (100, 101; 100', 101' ; 100", 101") de l'équipement de bande transporteuse (10 ; 10' ; 10") en fonction de la détection du séparateur de marchandises (11A-11D) dans la zone de détection (141) des dispositifs capteurs (14),
- l'équipement de transport possédant au moins une première portion de bande (100 ; 100' ; 100"), qui est configurée pour déposer des marchandises (W1-W4), et une deuxième portion de bande (101 ; 101'; 101"), la première portion de bande (100 ; 100' ; 100") étant adjacente à la deuxième portion de bande (101 ; 101' ; 101") au niveau de plusieurs transitions (102),
- et le dispositif de commande (15) étant configuré pour mettre la première portion de bande (100 ; 100' ; 100") dans un mouvement d'avance à une première vitesse et la deuxième portion de bande (101 ; 101' ; 101") dans un mouvement d'avance à une deuxième vitesse,
**caractérisé en ce que**
- la première portion de bande (100 ; 100' ; 100") comporte plusieurs bandes d'amenée (105A-105D), lesquelles sont reliées à la deuxième portion de bande (101 ; 101' ; 101") de telle sorte que des marchandises peuvent être transportées des bandes d'amenée (105A-105D) sur la deuxième portion de bande (101 ; 101' ; 101") et continuer d'être transportées par celle-ci,
- la deuxième portion de bande (101 ; 101' ; 101") est configurée pour transporter les marchandises (W1-W4) déposées sur la première portion de bande (100 ; 100' ; 100") dans la zone de détection (130) du dispositif de détection de marchandises (13),
- les bandes d'amenée (105A-105D) sont reliées par le biais d'une portion de liaison (103, 103') de la deuxième portion de bande (101 ; 101' ; 101") réalisée sous la forme d'une bande transporteuse, une transition (102) étant formée entre chacune des bandes d'amenée (105A-105D) et la portion de liaison (103, 103'),
- l'un des dispositifs capteurs (14) est disposé voisin de chaque transition (102), la zone de détection (141) des dispositifs capteurs (14) étant disposée au niveau de la transition (102) respective,
- le dispositif de commande (15) est configuré pour commander les vitesses de la première et de la deuxième portion de bande (100 ; 100' ; 100" ; 101 ; 101' ; 101") en fonction de la détection du séparateur de marchandises (11A-11D) dans la zone de détection du dispositif capteur (14) ;
- les dispositifs capteurs (14) sont respectivement configurés pour détecter, au moyen du capteur (140), en lisant un code lisible par machine présent sur un séparateur de marchandises (11A-11D) qui se trouve sur la bande d'amenée (105A-105D) qui est associée au dispositif capteur (14), si le séparateur de marchandises (11A-11D) se trouve dans la zone de détection (141), et
- le dispositif de commande (15) est configuré pour
- réduire une vitesse du mouvement d'avance de la bande d'amenée (105A-105D) pendant que le séparateur de marchandises (11A-11D) se trouve dans la zone de détection (141) du dispositif capteur (14) ; et
- arrêter la bande d'amenée (105A-105D) dès que le séparateur de marchandises (11A-11D) quitte la zone de détection (141) du dispositif capteur (14).

2. Arrangement de système de caisse selon la revendication 1, **caractérisé en ce que** le dispositif de détection de marchandises (13) est réalisé sous la forme d'un lecteur à balayage à portique.

3. Arrangement de système de caisse selon l'une des revendications précédentes, **caractérisé en ce que** le code lisible par machine présent sur le séparateur de marchandises (11A-11D) est lu à l'aide d'un champ électromagnétique généré par le capteur (140) du dispositif capteur (14).

4. Arrangement de système de caisse selon l'une des revendications précédentes, **caractérisé en ce que** le code lisible par machine présent sur le séparateur de marchandises (11A-11D) est fourni par une étiquette RFID (110) et **en ce que** le capteur (140) du dispositif capteur (14) est réalisé sous la forme d'une antenne RFID destinée à lire l'étiquette RFID (110) du séparateur de marchandises (11A-11D).

5. Arrangement de système de caisse selon l'une des revendications précédentes, **caractérisé en ce que** le code lisible par machine présent sur le séparateur de marchandises (11A-11D) est réalisé sous la forme d'un code à barres, d'un code QR, d'un graphique, d'un motif et/ou d'un filigrane numérique.

6. Arrangement de système de caisse selon l'une des revendications précédentes, **caractérisé par** plusieurs séparateurs de marchandises (11A-11D), les séparateurs de marchandises (11A-11D) pouvant être identifiés univoquement à l'aide du code lisible par machine présent sur les séparateurs de marchandises (11A-11D).

7. Arrangement de système de caisse selon l'une des revendications précédentes, **caractérisé en ce que** la deuxième vitesse est supérieure à la première vitesse.

8. Procédé pour faire fonctionner un arrangement de système de caisse, qui comporte
- un équipement de bande transporteuse (10 ; 10' ; 10") comprenant au moins une portion de bande (100, 101 ; 100', 101' ; 100", 101"), laquelle peut être mise dans un mouvement d'avance en vue de transporter des marchandises (W1-W4) qui se trouvent sur celle-ci le long d'un chemin d'avance de marchandises (P1-P3), les marchandises (W1-W4) pouvant être séparées les unes des autres le long du chemin d'avance de marchandises (P1-P3) par au moins un séparateur de marchandises (11A-11D), et
- un dispositif de détection de marchandises (13) destiné à détecter des marchandises (W1-W4) transportées au moyen de l'équipement de bande transporteuse (10 ; 10'; 10"),
- plusieurs dispositifs capteurs (14) espacés du dispositif de détection de marchandises (13) le long du chemin d'avance de marchandises (P1-P3) comprenant chacun un capteur (140) et une zone de détection (141), et
- un dispositif de commande (15),
les dispositifs capteurs (14) détectant respectivement, au moyen du capteur (140), si le séparateur de marchandises (11A-11D) se trouve dans la zone de détection (141) et le dispositif de commande (15) commandant le mouvement d'avance de la portion de bande (100, 101 ; 100', 101' ; 100", 101") de l'équipement de bande transporteuse (10 ; 10' ; 10") en fonction de la détection du séparateur de marchandises (11A-11D) dans la zone de détection (141) des dispositifs capteurs (14), l'équipement de transport possédant au moins une première portion de bande (100 ; 100' ; 100"), qui est configurée pour déposer des marchandises (W1-W4), et une deuxième portion de bande (101 ; 101' ; 101"), qui est configurée pour transporter les marchandises (W1-W4) déposées sur la première portion de bande (100 ; 100' ; 100") dans la zone de détection (130) du dispositif de détection de marchandises (13), la première portion de bande (100 ; 100' ; 100") étant adjacente à la deuxième portion de bande (101 ; 101' ; 101") au niveau d'une transition (102),
et le dispositif de commande (15) mettant la première portion de bande (100 ; 100' ; 100") dans un mouvement d'avance à une première vitesse et la deuxième portion de bande (101 ; 101' ; 101") dans un mouvement d'avance à une deuxième vitesse,
**caractérisé en ce que**
- la première portion de bande (100 ; 100' ; 100") comporte plusieurs bandes d'amenée (105A-105D), lesquelles sont reliées à la deuxième portion de bande (101 ; 101' ; 101") de telle sorte que des marchandises peuvent être transportées des bandes d'amenée (105A-105D) sur la deuxième portion de bande (101 ; 101' ; 101") et continuer d'être transportées par celle-ci,
- la deuxième portion de bande (101 ; 101' ; 101") est configurée pour transporter les marchandises (W1-W4) déposées sur la première portion de bande (100 ; 100' ; 100") dans la zone de détection (130) du dispositif de détection de marchandises (13),
- les bandes d'amenée (105A-105D) sont reliées par le biais d'une portion de liaison (103, 103') de la deuxième portion de bande (101 ; 101' ; 101") réalisée sous la forme d'une bande transporteuse, une transition (102) étant formée entre chacune des bandes d'amenée (105A-105D) et la portion de liaison (103, 103'),
- l'un des dispositifs capteurs (14) est disposé voisin de chaque transition (102), la zone de détection (141) du dispositif capteur (14) étant disposée au niveau de la transition (102) respective,
- la commande des vitesses de la première et de la deuxième portion de bande (100 ; 100' ; 100"; 101 ; 101' ; 101'') s'effectue en fonction de la détection du séparateur de marchandises (11A-11D) dans la zone de détection du dispositif capteur (14) ;
- lecture, par le dispositif capteur (14) au moyen du capteur (140), d'un code lisible par machine présent sur un séparateur de marchandises (11A-11D) qui se trouve sur la bande d'amenée (105A-105D) qui est associée au dispositif capteur (14), afin de détecter si le séparateur de marchandises (11A-11D) se trouve dans la zone de détection (141) ;
- réduction d'une vitesse du mouvement d'avance de la bande d'amenée (105A-105D) pendant que le séparateur de marchandises (11A-11D) se trouve dans la zone de détection (141) du dispositif capteur (14) ; et
- arrêt de la bande d'amenée (105A-105D) dès que le séparateur de marchandises (11A-11D) quitte la zone de détection (141) du dispositif capteur (14).
